# EUROPEAN PATENT SPECIFICATION

(11) **EP 1 840 515 B1**
(45) Date of publication and mention of the grant of the patent: **28.10.2009**
(21) Application number: 06116848.0
(22) Date of filing: 07.07.2006
(51) Int. Cl.: G01C 21/32, G09B 29/10

(54) **Methods and apparatus for dynamically labeling map objects in visually displayed maps of mobile communication devices**
Verfahren und Vorrichtung zur dynamischen Kennzeichnung von Kartenobjekten in visuell angezeigten Karten mobiler Kommunikationsvorrichtungen
Procédé et appareil de marquage dynamique des objets cartographiques dans des cartes affichées par des dispositifs de communication portables

(30) Priority: 31.03.2006 US 787541 P; 31.03.2006 US 788434 P
(43) Date of publication of application: 03.10.2007
(73) Proprietor: Research In Motion Limited, Waterloo, Ontario N2L 3W8 (CA)
(72) Inventor: Klassen, Gerhard Dietrich, Waterloo, Ontario, N2T 1H7 (CA); Johnson, Eric, Ottawa, Ontario K1T 1C1 (CA); Major, Harry Richmond, Waterloo, Ontario N2L 6N4 (CA); Boudreau, Jesse Joseph, Ottawa, Ontario, K1B 4X6 (CA); Devenyi, Peter John, Waterloo, Ontario N2T 2S2 (CA)
(74) Representative: Hibbert, Juliet Jane Grace

(56) References cited:
- EP-A- 1 710 713
- WO-A-86/02764
- WO-A-03/087725
- US-A- 5 559 938
- US-A1- 2003 184 594
- US-A1- 2003 229 441

## Description

### BACKGROUND

### Field of the Technology

The present disclosure relates generally to techniques for labeling map objects in visually displayed maps of mobile communication devices which operate in wireless communication networks.

### Description of the Related Art

In techniques of the prior art, a map object label of a map object may be fixed within the graphics data and fail to appear in several views of the map when the map is panned. For example, a street name of a street object may be fixed within the map data and fail to appear or appear conspicuously within several views of the map.

Accordingly, there is a need for methods and apparatus for suitably labeling map objects in visually displayed maps, especially in mobile communication devices which operate in wireless communication networks.

WO 86/02764 (Etak) discloses a computer system for displaying a map of streets corresponding to an area over which a vehicle may move to assist a driver to navigate. The system includes selective and dynamic labeling of streets on the display as the vehicle moves.

US 5,559,938 (Philips) discloses a display system for displaying a net of interconnected geographical paths provided with associated geographical names, and a road vehicle with on-board road-based navigation system having such display system. The system has a font generator for path names for displaying each name as a row of characters alongside its associated displayed path while featuring a multi-valued and finite orientation repertoire for the characters.

EP 1 710 713 A1 (Aisin) discloses systems, methods and programs for rotating font data. Font data and a plurality of conversion tables, each table corresponding to a preset rotational angle, are stored. One of the conversion tables may be selected in accordance with a required angle and the font data is rotated based on the selected conversion table. Map data may be stored, and name designations of display objects included in the map data in accordance with a display of map objects on a map may be generated, and a determination made of the required angle in accordance with the arrangement of the display objects on the map.

### SUMMARY

Methods and apparatus for dynamically labeling map objects for different views of a visually displayed map are described herein. For each view of a plurality of different views of a map, a view of the map is rendered "on-the-fly" in a display. The technique is performed by, first, identifying a request for a view of a map. If map data for a location corresponding to latitude and longitude coordinates of the request is not cached in memory of the mobile communication device: sending, via the wireless communication network, a request for map data with the latitude and longitude coordinates of the location as an input; receiving, via the wireless communication network, map data for the location corresponding to the latitude and longitude coordinates in response to the request for the map data; and, causing the map to be rendered in the display based on the map data received via the wireless communication network in response to the request for the map data. Otherwise, if map data for the location is cached in the memory: causing the map for the location to be rendered in the display based on the map data cached in the memory. The data includes maplets structured in a plurality of layers of data entries, and further includes map object graphics data and map object label data separate from the map object graphics data. The map object graphics data corresponds to at least a portion of a map object and includes vertice coordinates, and the map object label data corresponds to a map object label associated with the map object, and includes alphanumeric characters. Causing the map to be rendered in the display includes causing the portion of the map object to be rendered in the view of the display in accordance with the vertice coordinates of the map object graphics data. Causing the map to be rendered in the display further includes causing the map object label to be rendered in the view of the display, in accordance with the map object label data, on or along the portion of the map object between the vertice coordinates in accordance with a varying slope of the portion of the map object, at a position on or along the portion of the map object that is different from its position in each of the other views of the map and contained within the view in a continuous moving fashion from view to view, by performing the following further acts of: maintaining a plurality of stored rotated alphanumeric characters in the memory; and for each alphanumeric character of the map object label to be rendered at each location point along the varying slope of the portion of the map object: identifying a slope at the location point of the portion of the map object to render the alphanumeric character; identifying the alphanumeric character in the map object label for rendering; selecting, from the memory, one of the stored rotated alphanumeric characters that corresponds to the identified alphanumeric character in the map object label and the identified slope; and causing the selected stored rotated alphanumeric character corresponding to the slope to be rendered at the location point on or along the portion of the map.

Main aspects of the subject invention are as set out in the independent claims. Principal subsidiary features are as set out in the dependent claims.

### BRIEF DESCRIPTION OF THE DRAWINGS

Embodiments of present invention will now be described by way of example with reference to attached figures, wherein:
FIG. 1 is a block diagram which illustrates pertinent components of a mobile communication device and a wireless communication network of a communication system;
FIG. 2 is a more detailed diagram of a preferred mobile communication device of FIG. 1, namely, a mobile station;
FIG. 3A is a system diagram of network components which provide mapping functionality in the mobile communication devices of FIGs. 1 and 2;
FIG. 3B illustrates a message exchange between a mobile communication device and a map server for downloading map content to the mobile communication device based on the system of FIG. 3A;
FIG. 3C is a diagram showing a Maplet data structure according to an exemplary embodiment;
FIG. 4 is an illustration of a user interface of the mobile communication device;
FIG. 5 is an illustration of various software applications which may reside in the mobile communication device;
FIGs. 6 and 7 are illustrations of a positioning wheel of the mobile communication device;
FIG. 8 is an illustration of information which may be displayed in a visual display of the mobile communication device, the information being an address book contact of an address book of the mobile communication device;
FIG. 9 is an illustration of a listing of the address book contact of FIG. 8;
FIG. 10 is an illustration of the listing of the address book contact of FIG. 9, where a menu of functions which includes a map function may be invoked to display a map associated with the address book contact, the map being generally shown later in FIGs. 12-18;
FIG. 11 is a flowchart which helps describe a method of dynamically labeling map objects in visually displayed maps according to the present disclosure; and
FIGs. 12-18 are sequential views of a map to illustrate an example of the method of the present disclosure.

### DETAILED DESCRIPTION OF THE PREFERRED EMBODIMENTS

Methods and apparatus for dynamically labeling map objects for different views of a visually displayed map are described herein. For each view of a plurality of different views of a map, a view of the map is rendered "on-the-fly" in a display. The technique is performed by retrieving map data which includes map object graphics data and map object label data; causing one or more portions of a map object (e.g. a road) to be rendered in the view of the display in accordance with the map object graphics data; and also causing a map object label (e.g. a name of the road) to be rendered in the view of the display, in accordance with the map object label data, on or along a portion of the map object between its vertice coordinates, such that a linear position of the map object label on or along the portion of the map object is different from its linear position in each of the other views of the map so that the map object label fits within the view in a continuous moving fashion from view to view. In a specific embodiment, the map object label is rendered by identifying the portion of the map object to be a longest portion of the one or more portions of the map object in the view; identifying a centerpoint of the portion identified to be the longest portion; and causing the map object label to be rendered relative to the centerpoint of the portion identified to be the longest portion.

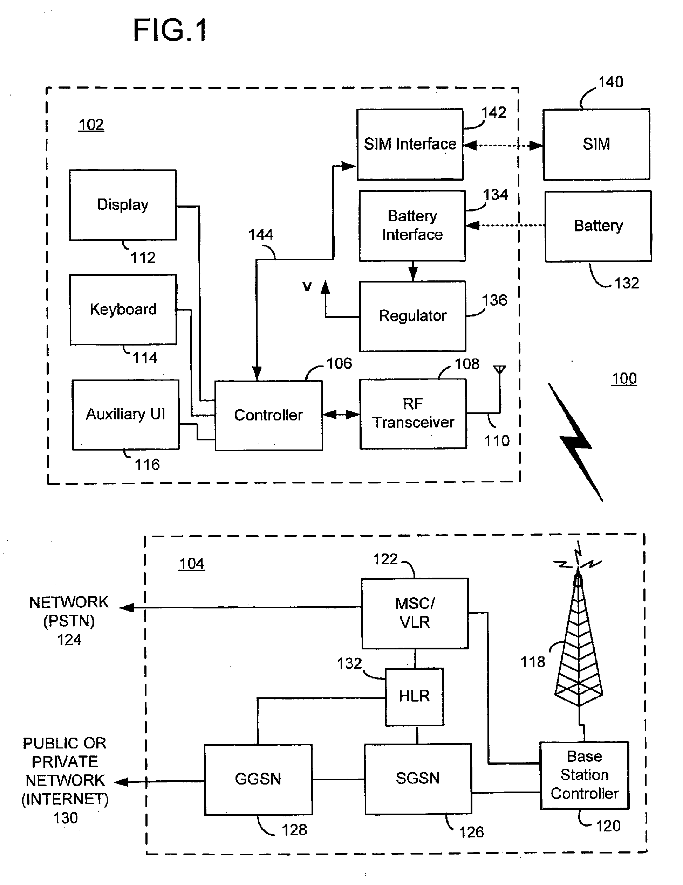

FIG. 1 is a block diagram of a communication system 100 which includes a mobile station 102 (one type of wireless or mobile communication device) which communicates through a wireless communication network 104. Mobile station 102 preferably includes a visual display 112, a keyboard 114, and perhaps one or more auxiliary user interfaces (UI) 116, each of which are coupled to a controller 106. Controller 106 is also coupled to radio frequency (RF) transceiver circuitry 108 and an antenna 110. Typically, controller 106 is embodied as a central processing unit (CPU) which runs operating system software in a memory component (not shown). Controller 106 will normally control overall operation of mobile station 102, whereas signal processing operations associated with communication functions are typically performed in RF transceiver circuitry 108. Controller 106 interfaces with device display 112 to display received information, stored information, user inputs, and the like. Keyboard 114, which may be a telephone type keypad or full alphanumeric keyboard, is normally provided for entering data for storage in mobile station 102, information for transmission to network 104, a telephone number to place a telephone call, commands to be executed on mobile station 102, and possibly other or different user inputs.

Mobile station 102 sends communication signals to and receives communication signals from network 104 over a wireless link via antenna 110. RF transceiver circuitry 108 performs functions similar to those of station 118 and BSC 120, including for example modulation/demodulation and possibly encoding/decoding and encryption/decryption. It is also contemplated that RF transceiver circuitry 108 may perform certain functions in addition to those performed by BSC 120. It will be apparent to those skilled in art that RF transceiver circuitry 108 will be adapted to particular wireless network or networks in which mobile station 102 is intended to operate.

Mobile station 102 includes a battery interface 134 for receiving one or more rechargeable batteries 132. Battery 132 provides electrical power to electrical circuitry in mobile station 102, and battery interface 134 provides for a mechanical and electrical connection for battery 132. Battery interface 134 is coupled to a regulator 136 which regulates power to the device. When mobile station 102 is fully operational, an RF transmitter of RF transceiver circuitry 108 is typically keyed or turned on only when it is sending to network, and is otherwise turned off to conserve resources. Similarly, an RF receiver of RF transceiver circuitry 108 is typically periodically turned off to conserve power until it is needed to receive signals or information (if at all) during designated time periods.

Mobile station 102 operates using a Subscriber Identity Module (SIM) 140 which is connected to or inserted in mobile station 102 at a SIM interface 142. SIM 140 is one type of a conventional "smart card" used to identify an end user (or subscriber) of mobile station 102 and to personalize the device, among other things. Without SIM 140, the mobile station terminal is not fully operational for communication through wireless network 104. By inserting SIM 140 into mobile station 102, an end user can have access to any and all of his/her subscribed services. SIM 140 generally includes a processor and memory for storing information. Since SIM 140 is coupled to SIM interface 142, it is coupled to controller 106 through communication lines 144. In order to identify the subscriber, SIM 140 contains some user parameters such as an International Mobile Subscriber Identity (IMSI). An advantage of using SIM 140 is that end users are not necessarily bound by any single physical mobile station. SIM 140 may store additional user information for the mobile station as well, including datebook (or calendar) information and recent call information.

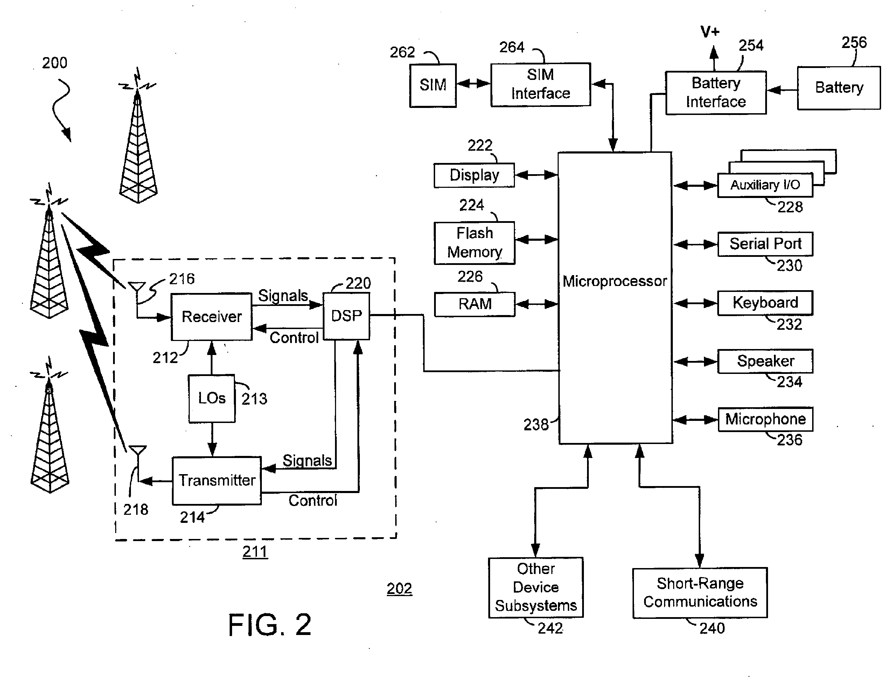

Mobile station 102 may consist of a single unit, such as a data communication device, a cellular telephone, a Global Positioning System (GPS) unit, a multiple-function communication device with data and voice communication capabilities, a personal digital assistant (PDA) enabled for wireless communication, or a computer incorporating an internal modem. Alternatively, mobile station 102 may be a multiple-module unit comprising a plurality of separate components, including but in no way limited to a computer or other device connected to a wireless modem. In particular, for example, in the mobile station block diagram of FIG. 1, RF transceiver circuitry 108 and antenna 110 may be implemented as a radio modem unit that may be inserted into a port on a laptop computer. In this case, the laptop computer would include display 112, keyboard 114, one or more auxiliary UIs 116, and controller 106 embodied as the computer's CPU. It is also contemplated that a computer or other equipment not normally capable of wireless communication may be adapted to connect to and effectively assume control of RF transceiver circuitry 108 and antenna 110 of a single-unit device such as one of those described above. Such a mobile station 102 may have a more particular implementation as described later in relation to mobile station 402 of FIG. 2.

Mobile station 102 communicates in and through wireless communication network 104. Wireless communication network 104 may be a cellular telecommunications network. In the embodiment of FIG. 1, wireless network 104 is configured in accordance with Global Systems for Mobile communications (GSM) and General Packet Radio Service (GPRS) technologies. Although wireless communication network 104 is described herein as a GSM/GPRS type network, any suitable network technologies may be utilized such as Code Division Multiple Access (CDMA), Wideband CDMA (WCDMA), whether 2G, 3G, or Universal Mobile Telecommunication System (UMTS) based technologies. In this embodiment, the GSM/GPRS wireless network 104 includes a base station controller (BSC) 120 with an associated tower station 118, a Mobile Switching Center (MSC) 122, a Home Location Register (HLR) 132, a Serving General Packet Radio Service (GPRS) Support Node (SGSN) 126, and a Gateway GPRS Support Node (GGSN) 128. MSC 122 is coupled to BSC 120 and to a landline network, such as a Public Switched Telephone Network (PSTN) 124. SGSN 126 is coupled to BSC 120 and to GGSN 128, which is in turn coupled to a public or private data network 130 (such as the Internet). HLR 132 is coupled to MSC 122, SGSN 126, and GGSN 128.

Station 118 is a fixed transceiver station, and station 118 and BSC 120 may be referred to as transceiver equipment. The transceiver equipment provides wireless network coverage for a particular coverage area commonly referred to as a "cell". The transceiver equipment transmits communication signals to and receives communication signals from mobile stations within its cell via station 118. The transceiver equipment normally performs such functions as modulation and possibly encoding and/or encryption of signals to be transmitted to the mobile station in accordance with particular, usually predetermined, communication protocols and parameters, under control of its controller. The transceiver equipment similarly demodulates and possibly decodes and decrypts, if necessary, any communication signals received from mobile station 102 within its cell. Communication protocols and parameters may vary between different networks. For example, one network may employ a different modulation scheme and operate at different frequencies than other networks.

The wireless link shown in communication system 100 of FIG. 1 represents one or more different channels, typically different radio frequency (RF) channels, and associated protocols used between wireless network 104 and mobile station 102. An RF channel is a limited resource that must be conserved, typically due to limits in overall bandwidth and a limited battery power of mobile station 102. Those skilled in art will appreciate that a wireless network in actual practice may include hundreds of cells, each served by a station 118 (i.e. or station sector), depending upon desired overall expanse of network coverage. All pertinent components may be connected by multiple switches and routers (not shown), controlled by multiple network controllers.

For all mobile station's 102 registered with a network operator, permanent data (such as mobile station 102 user's profile) as well as temporary data (such as mobile station's 102 current location) are stored in HLR 132. In case of a voice call to mobile station 102, HLR 132 is queried to determine the current location of mobile station 102. A Visitor Location Register (VLR) of MSC 122 is responsible for a group of location areas and stores the data of those mobile stations that are currently in its area of responsibility. This includes parts of the permanent mobile station data that have been transmitted from HLR 132 to the VLR for faster access. However, the VLR of MSC 122 may also assign and store local data, such as temporary identifications. Optionally, the VLR of MSC 122 can be enhanced for more efficient co-ordination of GPRS and non-GPRS services and functionality (e.g. paging for circuit-switched calls which can be performed more efficiently via SGSN 126, and combined GPRS and non-GPRS location updates).

Serving GPRS Support Node (SGSN) 126 is at the same hierarchical level as MSC 122 and keeps track of the individual locations of mobile stations. SGSN 126 also performs security functions and access control. Gateway GPRS Support Node (GGSN) 128 provides interworking with external packet-switched networks and is connected with SGSNs (such as SGSN 126) via an IP-based GPRS backbone network. SGSN 126 performs authentication and cipher setting procedures based on the same algorithms, keys, and criteria as in existing GSM. In conventional operation, cell selection may be performed autonomously by mobile station 102 or by the transceiver equipment instructing mobile station 102 to select a particular cell. Mobile station 102 informs wireless network 104 when it reselects another cell or group of cells, known as a routing area.

In order to access GPRS services, mobile station 102 first makes its presence known to wireless network 104 by performing what is known as a GPRS "attach". This operation establishes a logical link between mobile station 102 and SGSN 126 and makes mobile station 102 available to receive, for example, pages via SGSN, notifications of incoming GPRS data, or SMS messages over GPRS. In order to send and receive GPRS data, mobile station 102 assists in activating the packet data address that it wants to use. This operation makes mobile station 102 known to GGSN 128; interworking with external data networks can thereafter commence. User data may be transferred transparently between mobile station 102 and the external data networks using, for example, encapsulation and tunneling. Data packets are equipped with GPRS-specific protocol information and transferred between mobile station 102 and GGSN 128.

Those skilled in art will appreciate that a wireless network may be connected to other systems, possibly including other networks, not explicitly shown in FIG. 1. A network will normally be transmitting at very least some sort of paging and system information on an ongoing basis, even if there is no actual packet data exchanged. Although the network consists of many parts, these parts all work together to result in certain behaviours at the wireless link.

FIG. 2 is a detailed block diagram of a preferred mobile station 202 of the present disclosure. Mobile station 202 is preferably a two-way communication device having at least voice and advanced data communication capabilities, including the capability to communicate with other computer systems. Depending on the functionality provided by mobile station 202, it may be referred to as a data messaging device, a two-way pager, a cellular telephone with data messaging capabilities, a wireless Internet appliance, or a data communication device (with or without telephony capabilities). Mobile station 202 may communicate with any one of a plurality of fixed transceiver stations 200 within its geographic coverage area.

Mobile station 202 will normally incorporate a communication subsystem 211, which includes a receiver 212, a transmitter 214, and associated components, such as one or more (preferably embedded or internal) antenna elements 216 and 218, local oscillators (LOs) 213, and a processing module such as a digital signal processor (DSP) 220. Communication subsystem 211 is analogous to RF transceiver circuitry 108 and antenna 110 shown in FIG. 1. As will be apparent to those skilled in field of communications, particular design of communication subsystem 211 depends on the communication network in which mobile station 202 is intended to operate.

Mobile station 202 may send and receive communication signals over the network after required network registration or activation procedures have been completed. Signals received by antenna 216 through the network are input to receiver 212, which may perform such common receiver functions as signal amplification, frequency down conversion, filtering, channel selection, and like, and in example shown in FIG. 2, analog-to-digital (A/D) conversion. A/D conversion of a received signal allows more complex communication functions such as demodulation and decoding to be performed in DSP 220. In a similar manner, signals to be transmitted are processed, including modulation and encoding, for example, by DSP 220. These DSP-processed signals are input to transmitter 214 for digital-to-analog (D/A) conversion, frequency up conversion, filtering, amplification and transmission over communication network via antenna 218. DSP 220 not only processes communication signals, but also provides for receiver and transmitter control. For example, the gains applied to communication signals in receiver 212 and transmitter 214 may be adaptively controlled through automatic gain control algorithms implemented in DSP 220.

Network access is associated with a subscriber or user of mobile station 202, and therefore mobile station 202 requires a Subscriber Identity Module or "SIM" card 262 to be inserted in a SIM interface 264 in order to operate in the network. SIM 262 includes those features described in relation to FIG. 1. Mobile station 202 is a battery-powered device so it also includes a battery interface 254 for receiving one or more rechargeable batteries 256. Such a battery 256 provides electrical power to most if not all electrical circuitry in mobile station 202, and battery interface 254 provides for a mechanical and electrical connection for it. The battery interface 254 is coupled to a regulator (not shown) which provides a regulated voltage V to all of the circuitry.

Mobile station 202 includes a microprocessor 238 (which is one implementation of controller 106 of FIG. 1) which controls overall operation of mobile station 202. Communication functions, including at least data and voice communications, are performed through communication subsystem 211. Microprocessor 238 also interacts with additional device subsystems such as a display 222, a flash memory 224, a random access memory (RAM) 226, auxiliary input/output (I/O) subsystems 228, a serial port 230, a keyboard 232, a speaker 234, a microphone 236, a short-range communications subsystem 240, and any other device subsystems generally designated at 242. Some of the subsystems shown in FIG. 2 perform communication-related functions, whereas other subsystems may provide "resident" or on-device functions. Notably, some subsystems, such as keyboard 232 and display 222, for example, may be used for both communication-related functions, such as entering a text message for transmission over a communication network, and device-resident functions such as a calculator or task list. Operating system software used by microprocessor 238 is preferably stored in a persistent store such as flash memory 224, which may alternatively be a read-only memory (ROM) or similar storage element (not shown). Those skilled in the art will appreciate that the operating system, specific device applications, or parts thereof, may be temporarily loaded into a volatile store such as RAM 226.

Microprocessor 238, in addition to its operating system functions, preferably enables execution of software applications on mobile station 202. A predetermined set of applications which control basic device operations, including at least data and voice communication applications, as well as techniques of the present disclosure, will normally be installed on mobile station 202 during its manufacture. A preferred application that may be loaded onto mobile station 202 may be a personal information manager (PIM) application having the ability to organize and manage data items relating to user such as, but not limited to, e-mail, calendar events, voice mails, appointments, and task items. Naturally, one or more memory stores are available on mobile station 202 and SIM 256 to facilitate storage of PIM data items and other information.

The PIM application preferably has the ability to send and receive data items via the wireless network. In the present disclosure, PIM data items may be seamlessly integrated, synchronized, and updated via the wireless network, with the mobile station user's corresponding data items stored and/or associated with a host computer system thereby creating a mirrored host computer on mobile station 202 with respect to such items. This is especially advantageous where the host computer system is the mobile station user's office computer system. Additional applications may also be loaded onto mobile station 202 through network, an auxiliary I/O subsystem 228, serial port 230, short-range communications subsystem 240, or any other suitable subsystem 242, and installed by a user in RAM 226 or preferably a non-volatile store (not shown) for execution by microprocessor 238. Such flexibility in application installation increases the functionality of mobile station 202 and may provide enhanced on-device functions, communication-related functions, or both. For example, secure communication applications may enable electronic commerce functions and other such financial transactions to be performed using mobile station 202.

In a data communication mode, a received signal such as a text message, an e-mail message, or web page download will be processed by communication subsystem 211 and input to microprocessor 238. Microprocessor 238 will preferably further process the signal for output to display 222 or alternatively to auxiliary I/O device 228. A user of mobile station 202 may also compose data items, such as e-mail messages, for example, using keyboard 232 in conjunction with display 222 and possibly auxiliary I/O device 228. Keyboard 232 is preferably a complete alphanumeric keyboard and/or telephone-type keypad. These composed items may be transmitted over a communication network through communication subsystem 211.

For voice communications, the overall operation of mobile station 202 is substantially similar, except that the received signals would be output to speaker 234 and signals for transmission would be generated by microphone 236. Alternative voice or audio I/O subsystems, such as a voice message recording subsystem, may also be implemented on mobile station 202. Although voice or audio signal output is preferably accomplished primarily through speaker 234, display 222 may also be used to provide an indication of the identity of a calling party, duration of a voice call, or other voice call related information, as some examples.

Serial port 230 in FIG. 2 is normally implemented in a personal digital assistant (PDA)-type communication device for which synchronization with a user's desktop computer is a desirable, albeit optional, component. Serial port 230 enables a user to set preferences through an external device or software application and extends the capabilities of mobile station 202 by providing for information or software downloads to mobile station 202 other than through a wireless communication network. The alternate download path may, for example, be used to load an encryption key onto mobile station 202 through a direct and thus reliable and trusted connection to thereby provide secure device communication.

Short-range communications subsystem 240 of FIG. 2 is an additional optional component which provides for communication between mobile station 202 and different systems or devices, which need not necessarily be similar devices. For example, subsystem 240 may include an infrared device and associated circuits and components, or a Bluetooth^{™} communication module to provide for communication with similarly-enabled systems and devices. Bluetooth^{™} is a registered trademark of Bluetooth SIG, Inc.

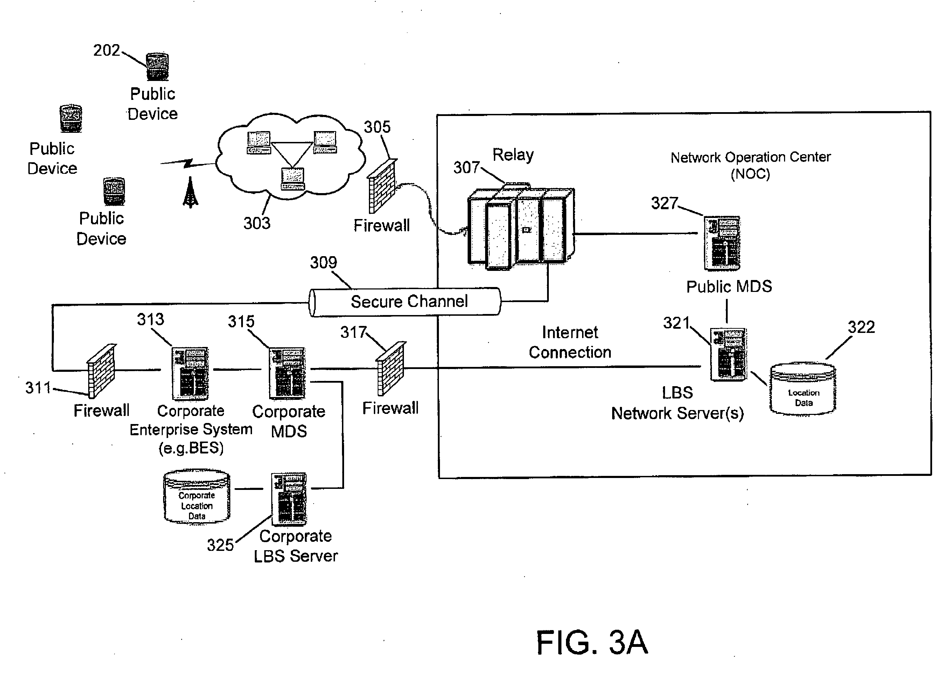

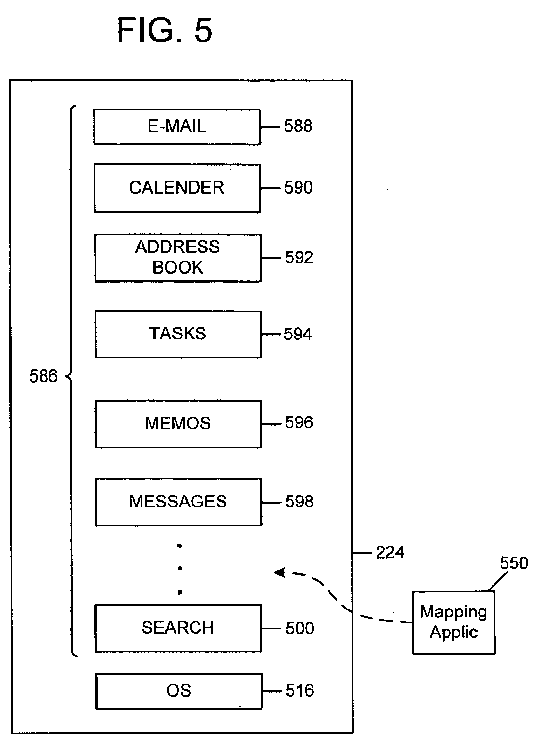

FIG. 3A is a system diagram of network components which provide mapping functionality in the mobile communication devices of FIGs. 1 and 2. To achieve this, a mapping application is also provided in memory of the mobile communication device (e.g. a mapping application 550 of FIG. 5) for rendering of visual maps in its display. Mobile communication devices, such as mobile station 202, are connected over a mobile carrier network 303, for communication through a firewall 305 to a relay 307. A request for map data from any one of the mobile communication devices is received at relay 307 and passed via a secure channel 309 through firewall 311 to a corporate enterprise server 313 and corporate mobile data system (MDS) server 315. The request is then passed via firewall 317 to a public location-based service (LBS) server 321 which provides location-based services (LB S) to handle the request. The network may include a plurality of such LBS servers where requests are distributed and processed through a load distributing server. The LBS data may be stored on this network server 321 in a network database 322, or may be stored on a separate LBS data server (not shown). Private corporate data stored on corporate LBS server 325 may be added to the public data via corporate MDS server 315 on the secure return path to mobile station 202. Alternatively, where no corporate servers provided, the request from mobile station 202 may be passed via relay 307 to a public MDS server 327, which sends the request to public LBS server 321 providing LBS to handle the request.

A Maplet data structure is provided that contains all of the graphic and labeled content associated with a geographic area (e.g. map features such as restaurants (point features), streets (line features), or lakes (polygon features)). Maplets are structured in Layers of "DEntries" (Data Entries) identified by a "Layer ID" to enable data from different sources to be deployed to the device and meshed for proper rendering. Each DEntry is representative of one or more artifact or label (or a combination of both) and includes coordinate information (also referred to a "bounding box" or "bounding area") to identify the area covered by the DEntry and a plurality of data Points that together represent the artifact or label. For example, a DEntry may be used to represent a street on a city map (or a plurality of streets), wherein the various Points within the DEntry are separated into different parts representing various portions of the artifact (e.g. portions of a street). A mobile device may issue a request for the map server to download only those DEntries that are included within a specified area or bounding box representing an area of interest that can be represented by, for example, a pair of bottom left, top right coordinates.

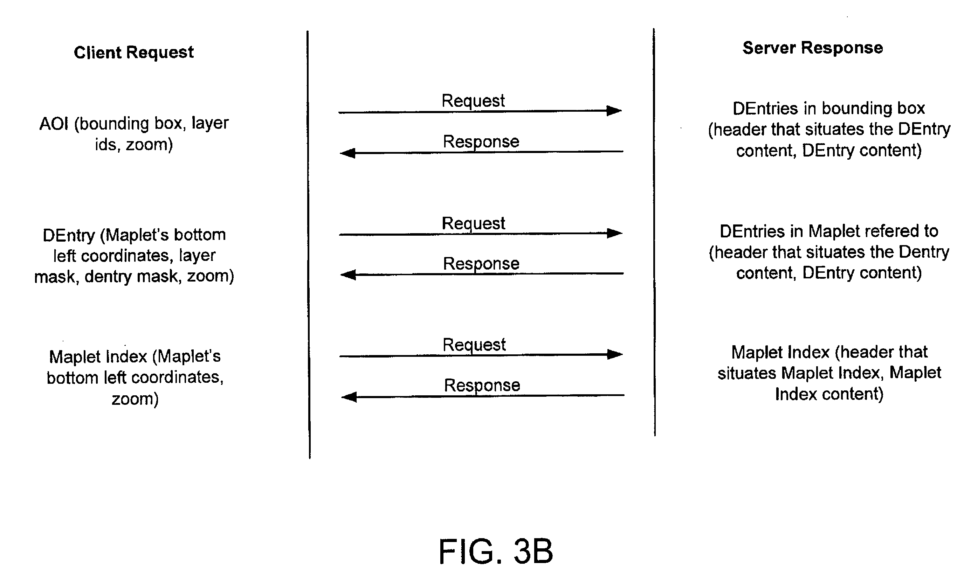

As discussed later below with reference to FIG. 3B, the mobile device issues one or more AOI (Area of Interest) requests, DEntry or data requests and Maplet Index requests to the map server, for selective downloading of map data based on user context Thus, rather than transmitting the entire map data with each request from the device, local caching may be used within the mobile device in conjunction with context filtering of map data on the server. For example, if a user's mobile device is GPS enabled and the user is traveling in an automobile at 120 km/hr along a freeway then context filtering can be employed to prevent downloading of map data relating to passing side streets. Or, if the user is traveling in an airplane at 30,000' then context filtering can be employed to prevent downloading of map data for any streets whatsoever. Also, a user's context can be defined, for example, in terms of occupation (e.g. a user whose occupation is transport truck driver can employ context filtering to prevent downloading of map data for side streets on which the user's truck is incapable of traveling, or a user whose occupation is to replenish supplies of soft drink dispensing machines can employ context filtering to download public map data showing the user's geographical area of responsibility with irrelevant features such as lakes or parks filtered out and private map data containing the location of soft drink dispensing machines superimposed on the public map data.

The Maplet Index request results in a Maplet Index (i.e. only a portion of the Maplet that provides a table of contents of the map data available within the Maplet rather than the entire Maplet) being downloaded from the map server to the device, thereby conserving OTA (Over-the-Air) bandwidth and device memory caching requirements. The Maplet Index conforms to the same data structure as a Maplet, but omits the data Points. Consequently, the Maplet Index is small (e.g. 300-400 bytes) relative to the size of a fully populated Maplet or a conventional bit map, and includes DEntry bounding boxes and attributes (size, complexity, etc.) for all artifacts within the Maplet. As the field of view changes (e.g. for a location-aware device that displays a map while moving), the device (client) software assesses whether or not it needs to download additional data from the server. Thus, as discussed above, if the size attribute or complexity attribute of an artifact that has started to move into the field of view of the device (but is not yet being displayed) is not relevant to the viewer's current context, then the device can choose not to display that portion of the artifact. On the other hand, if the portion of the artifact is appropriate for display then the device accesses its cache to determine whether the DEntries associated with that portion of the artifact have already been downloaded, in which case the cached content is displayed. Otherwise, the device issues a request for the map server to download all of the DEntries associated with the artifact portion.

By organizing the Maplet data structure in Layers, it is possible to seamlessly combine and display information obtained from public and private databases. For example, it is possible for the device to display an office building at a certain address on a street (e.g. 1^{st} z-order attribute from public database), adjacent a river (e.g. 2^{nd} z-order attribute from public database), with a superimposed floor plan of the building to show individual offices (e.g. 11^{th} z-order attribute from a private database, accessible through a firewall).

Referring back to FIG. 3A, within the network having LBS server(s) 321 and database(s) 322 accessible to it, all of the map data for the entire world is divided and stored as a grid according to various levels of resolution (zoom), as set forth below in Table A. Thus, a single A level Maplet represents a 0.05 x 0.05 degree grid area; a single B level Maplet represents a 0.5 x 0.5 degree grid area; a single C level Maplet represents a 5 x 5 degree grid area; a single D level Maplet represents a 50 x 50 degree grid area and a single E level Maplet represents the entire world in a single Maplet. It is understood that Table A is only an example of a particular Maplet grid configuration; other or different grid configurations may also be developed. A Maplet comprises of a set of layers, with each layer containing a set of DEntries, and each DEentry containing a set of points.

**Table A**

| Level | Grid (degrees) | # of Maplets to cover the World | # of Maplets to cover North America | # of Maplets to cover Europe |
|---|---|---|---|---|
| A | 0.05 x 0.05 | 25,920,000 | 356,000 | 100,000 |
| B | 0.5 x 0.5 | 259,200 | 6,500 | 1000 |
| C | 5 x 5 | 2,592 | 96 | 10 |
| D | 50 x 50 | 32 | 5 | 5 |
| E | World | 1 | 1 | 1 |

Turning now to FIG. 3B, three specific types of requests may be generated by a mobile communication device (i.e. the client) - AOI requests, DEntry requests, and Maplet Index requests. The requests may be generated separately or in various combinations, as discussed in greater detail below. An AOI (area of interest) request calls for all DEntries in a given area (bounding box) for a predetermined or selected set of z-order layers. The AOI request is usually generated when the mobile communication device moves to a new area so as to fetch Dentries for display before the device client knows what is available in the Maplet. The Maplet Index has the exact same structure as a Maplet but does not contain complete DEntries (i.e. the data Points that actually represent artifacts and labels are omitted). Thus, a Maplet Index defines what layers and DEntries are available for a given Maplet. A data or DEntry request is a mechanism to bundle together all of the required Dentries for a given Maplet.

Typically, AOI (area of interest) and Maplet Index requests are paired together in the same message, although they need not be, while DEntry requests are generated most often. For example, when the mobile communication device moves into an area in connection with which no information has been stored on the device client, the Maplet Index request returns a Maplet Index that indicates what data the client can specifically request from the server 321, while the AOI request returns any DEntries within the area of interest for the specified layers (if they exist). In the example requests shown in FIG. 3B, the desired Maplet is identified within a DEntry request by specifying the bottom-left Maplet coordinate. In addition, the DEntry request may include a layer mask so that unwanted Layers are not downloaded, a DEntry mask so that unwanted data Points are not downloaded, and zoom values to specify a zoom level for the requested DEntry. Once the device client has received the requested Maplet Index, the client typically then issues multiple DEntry requests to ask for specific DEntries (since the client knows all of the specific DEntries that are available based on the Maplet Index).

According to the present disclosure, a collection of 20 x 20 A-level Maplets (representing a 1 x 1 degree square) is compiled into a maplet file (.mbl). An .mbl file contains a header which specifies the offset and length of each Maplet in the .mbl file. The same 20 x 20 collection of Maplet index data is compiled into a Maplet Index file (.mbx). The .mbl and .mbx file structures are set forth in Tables B and C, respectively.

**Table B**

| Address Offset | Offset | Length |
|---|---|---|
| 0x000 | Maplet # 0 Offset (4 bytes) | Maplet # 0 Length (4 bytes) |
| 0x008 | Maplet # 1 Offset | Maplet # 1 Length |
| 0x010 | Maplet # 2 Offset | Maplet # 2 Length |
| ... | ... | ... |
| 0xC78 | Maplet # 399 Offset | Maplet # 399 Length |
| 0xC80 | Beginning of Maplet # 0 | |
| 0xC80 + Size of Maplet # 0 | Beginning of Maplet # 1 | |
| 0xC80 + Size of Maplet # 0 + # 1 | Beginning of Maplet # 2 | |
| ... | ... | |
| 0xC80 + Σ of Size of Maplets (# 0 : # 398) | Beginning of Maplet # 399 | |

In Table B, the offset of Maplet # 0 is 0x0000_0000 since, according to the present disclosure, the data structure is based on the assumption that the base address for the actual Maplet data is 0x0000_0C80. Therefore the absolute address for Maplet # 0 data is: Maplet # 0 Address = Base Address (0x0000_0C80) + Maplet # 0 Offset (0x0000_0000), and additional Maplet addresses are calculated as: Maplet # (n + 1) Offset = Maplet # (n) Offset + Maplet #(n) Length. If a Maplet has no data or does not exist, the length parameter is set to zero (0x0000_0000).

**Table C**

| Address Offset | Offset (4 bytes) | Length (4 bytes) |
|---|---|---|
| 0x000 | Maplet Index # 0 Offset | Maplet Index # 0 Length |
| 0x008 | Maplet Index # 1 Offset | Maplet Index # 1 Length |
| 0x010 | Maplet Index # 2 Offset | Maplet Index # 2 Length |
| ... | ... | ... |
| 0xC78 | Maplet Index # 399 Offset | Maplet Index # 399 Length |
| 0xC80 | Beginning of Maplet Index # 0 | |
| 0xC80 + Size of Maplet Index #0 | Beginning of Maplet Index # 1 | |
| 0xC80 + Size of Maplet Index #0 + #1 | Beginning of Maplet Index # 2 | |
| ... | ... | |
| 0xC80 + Σ of Size of Maplet Indices (# 0 : # 399) | Beginning of Maplet Index # 399 | |

In Table C, the offset of Maplet Index # 0 is 0x0000_0000 since, according to the present disclosure the data structure is based on the assumption that the base address for the actual Maplet index data is 0x0000_0C80. Therefore the absolute address for Maplet Index #0 data is: Maplet Index # 0 Address = Base Address (0x0000_0C80) + Maplet Index # 0 Offset (0x0000_0000), and additional Maplet index addresses are calculated as: Maplet Index # (n + 1) Offset = Maplet Index # (n) Offset + Maplet Index #(n) Length. If a Maplet Index has no data or does not exist, the length parameter is set to zero (0x0000_0000).

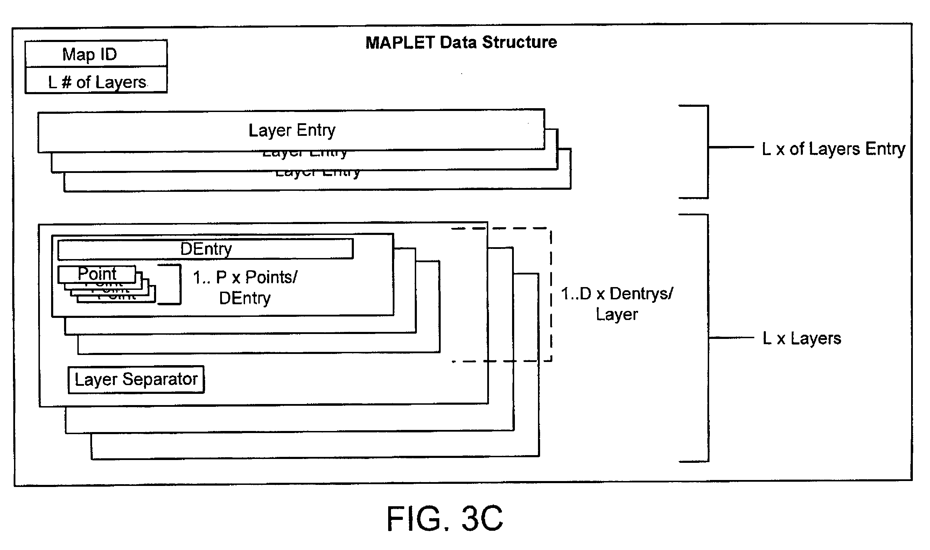

FIGs. 3C and Table D below, in combination, illustrate an exemplary embodiment of a basic Maplet data structure. Generally, as noted above, the Maplet data structure can be said to include a Maplet Index (ie an index of the DEntries, each of which representative of either an artifact or a label or both) together with data Points for each DEntry that actually form such artifacts and labels. In this example, each Maplet includes a Map ID (e. g. 0xA1B1C1D1), the # of Layers in the Maplet, and a Layer Entry for each Layer. The Map ID identifies the data as a valid Maplet, and according to one alternative, may also be used to identify a version number for the data. The # of Layers is an integer which indicates the number of Layers (and therefore Layer Entries) in the Maplet. Each Layer Entry defines rendering attributes for all DEntries in the corresponding Layer and is followed by a list of DEntries for that Layer. The above forms a Maplet Index. For a complete Maplet, each DEntry contains a set of data Points (referred to herein as oPoints) or Labels). Note that Layers may have multiple DEntries and the complete list of DEntrys and Points are grouped by Layer and separated by a Layer Separator (e.g. hex value 0xEEEEEEEE). According to an exemplary embodiment, each Layer Entry is 20 bytes long, and a DEntry is 12 bytes long. However, the number of Layers, number of DEntries per Layer and the number of Points per DEntry depends on the map data and is variable.

Table D provides a high "byte-level" description of a Maplet.

**Table D**

| Data | | Quantity | Total # of Bytes |
|---|---|---|---|
| Map ID | | 1 | 4 bytes |
| # of Layers | | 1 | 4 bytes |
| Layer Entrys | | # of Layers | 20 bytes x (# of Layers) |
| DEntry of a Layer | x (# of DEntries in a Layer) | # of Layers | 12 bytes x (Σ of the # of DEntrys in each Layer) + |
| Points for DEntry of a Layer | | | 4 bytes x (Σ of the # of Points in each DEntry in each Layer) + |
| Layer Separator | | | 4 bytes x (# of Layers) |

For even greater detail if desired, this application hereby incorporates by reference herein a U.S. provisional patent application entitled "Method And System For Distribution Of Map Content To Mobile Communication Devices" having serial number 60/787,541, docket number RIM 30176-ID, lead inventor Eric Johnson, and a filing date of 31 March 2006.

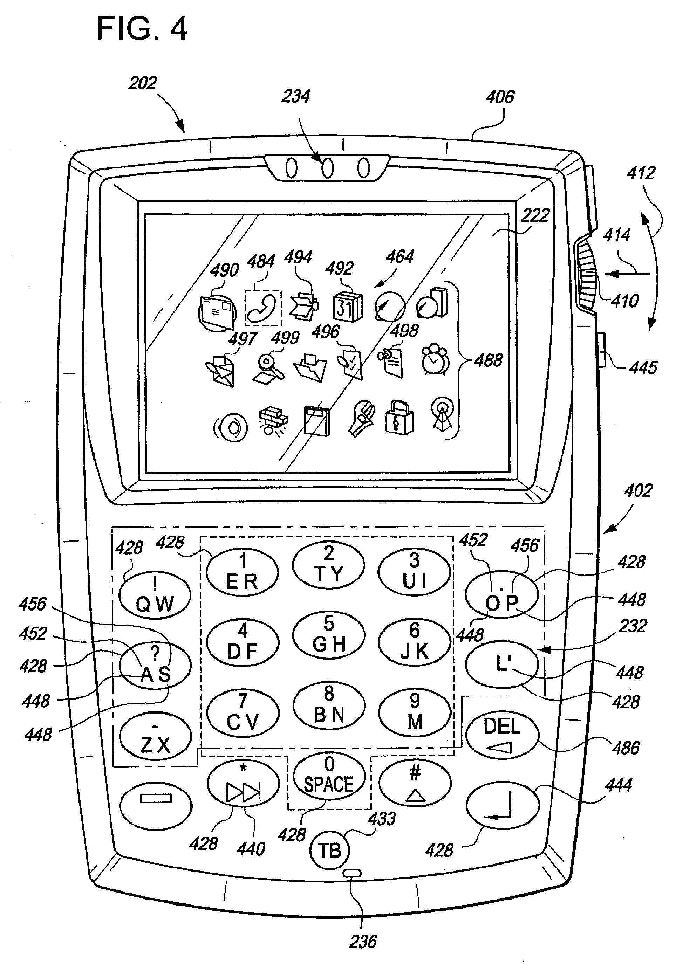

FIG. 4 is an example of a user interface 402 of mobile station 202 which includes at least display 222, keyboard 232, speaker 234, microphone 236, and a cursor or view positioning mechanism such as a positioning wheel 410 (e.g. a scrollwheel wheel) or a trackball 433. Although shown enlarged in FIG. 4 for clarity, this mobile station 202 is sized to be a handheld portable device. As an alternative to or in addition to positioning wheel 410 and/or trackball 433, a wide range of one or more pointing or cursor/view positioning mechanisms such as a touch pad a joystick button, a mouse, a touchscreen, a tablet, or other whether presently known or unknown, may be employed. As employed herein, the term "cursor" shall expressly include, but not be limited by, a pointer, a movable item or other visual cue (e.g. without limitation, a graphical object; a special symbol; an outline; a rectangle; an underline character; a blinking item) used to mark a position or point to another item on a display, in order to, for example, indicate position for data entry or for selection of the other item.

Keys 428 of keyboard 232 are disposed on a front face of a housing 406 and positioning wheel 410 is disposed at a side of housing 406. Keyboard 232 is in the example form of a reduced QWERTY keyboard including a plurality of keys 428 that serve as input members. It can be seen that the arrangement of the characters 448 on keys 428 of keyboard 424 is generally of the QWERTY arrangement, albeit with many of keys 428 including two of characters 448. In the example depiction of keyboard 424, many of keys 428 include two characters, such as including a first character 452 and a second character 456 assigned thereto. It is understood that the expression "characters" shall broadly be construed to include letters, digits, symbols and the like and can additionally include ideographic characters, components thereof, and the like. One of keys 428 of keyboard 424 includes as the characters 448 thereof the letters "Q" and "W", and an adjacent key 428 includes as the characters 448 thereof the letters "E" and "R". Keyboard 424 may be of other configurations, such as an AZERTY keyboard, a QWERTZ keyboard, a Dvorak keyboard, or other keyboard or keypad arrangement, whether presently known or unknown, and either reduced or not reduced (i.e. full). In a "full" or non-reduced keyboard or keypad arrangement, each key has a single letter (not multiple letters) of the alphabet assigned to it.

Among keys 428 of keyboard 232 are a <NEXT> key 440 and an <ENTER> key 444. The <NEXT> key 440, wherein, for example, "<NEXT>" may be a symbol or may be the word "next" provided (e.g. printed) on the key, may be pressed to provide a selection input to the processor and provides substantially the same selection input as is provided by a rotational input of positioning wheel 410. Since <NEXT> key 440 is provided adjacent a number of other keys 428 of keyboard 232, the user can provide a selection input to the processor substantially without moving the user's hands away from the keyboard 232 during a text entry operation. Another key, the <ESC> key 445 is disposed on the side of housing 406 adjacent positioning wheel 438, although the same or similar key may be disposed as part of keyboard 232. Among keys 428 of the keyboard 424 additionally is a <DEL> key 486 that can be provided to delete a text entry.

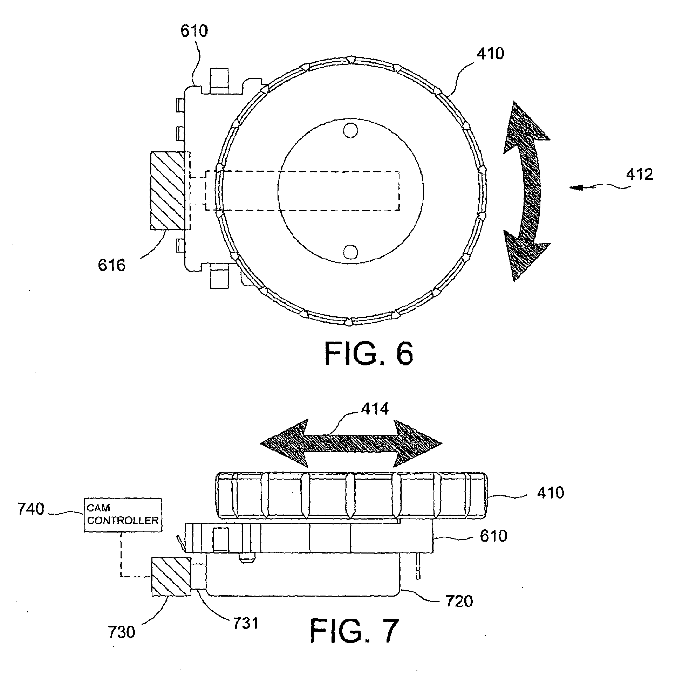

Positioning wheel 410 may serve as another input member and is both rotatable, as is indicated by an arrow 412, to provide selection inputs to the processor, and also can be pressed in a direction generally toward housing 406, as is indicated by an arrow 414 to provide another selection input to the processor. Positioning wheel 410 will be described in more detail in relation to FIGs. 6 and 7 below.

Display 222 may include a cursor 484 that depicts generally where the next input or selection from user interface 402 will be received. Display 222 is shown in FIG. 4 as displaying a home screen that represents a number of applications 586 (see also FIG. 5 which shows some of the example possible applications 86) depicted as corresponding discrete icons 488. Icons 488 include, for example, an Electronic Mail (E-Mail) icon 490, a Calendar icon 492, an Address Book icon 494, a Tasks icon 496, a Messages icon 497, a MemoPad icon 498, and a Search icon 499, respectively.

As shown in FIG. 5, memory 224 includes a plurality of applications or routines 586 associated with the visually displayed icons 488 of FIG. 4 for the processing of data. Applications 586 may be in any of a variety of forms such as, without limitation, software, firmware, and the like. Applications 586 include, for example, an Electronic Mail (E-Mail) application 588 (FIG. 5) associated with E-mail icon 490 (FIG. 4), a Calendar application 590 (FIG. 5) associated with Calendar icon 492 (FIG. 4), an Address Book application 592 (FIG. 5) associated with Address Book icon 494 (FIG. 4), a Tasks application 594 (FIG. 5) associated with Tasks icon 496 (FIG. 4), a MemoPad (Memos) application 596 (FIG. 5) associated with MemoPad icon 498, a Messages application 598 (FIG. 5) associated with Message icon 497 (FIG. 4), and a Search application 500 (FIG. 5) associated with Search icon 499 (FIG. 4). An operating system (OS) program 516 also resides in memory 224. The mobile station of the present disclosure is also adapted to render visual maps in its visual display, and utilizes a mapping application 550 stored in memory 224 to facilitate map rendering and related functionality.

In FIG. 4, the "home" screen output is currently active and constitutes the main "ribbon" application for displaying the icons 488 shown. An application, such as E-mail application 588 of FIG. 5, may then be initiated (opened or viewed) from user interface 402 by providing a suitable user input to it. For example, E-mail application 588 may be initiated (opened or viewed) by rotating positioning wheel 410 to highlight E-mail icon 490 and providing a selection input by translating positioning wheel 410 in the direction indicated by arrow 438. As another example, display 222 displays icon 499 associated with Search application 500 and accepts input from positioning wheel 410 to initiate a search from that icon 499. Applications 586 may be additionally or alternatively initiated (opened or viewed) from user interface 402 by providing another suitable input to it, such as by suitably rotating or "rolling" trackball 433 and providing a selection input by, for example, pushing the trackball 33 (e.g. somewhat similar to positioning wheel 410 except into the plane of FIG. 4).

Movement, navigation, and/or scrolling with use of a cursor/view positioning mechanism is beneficial given the relatively large size of visually displayed information and the compact size of display 222, and since information and messages are typically only partially presented in the limited view of display 222 at any given moment. As previously described, positioning wheel 410 is one helpful cursor/view positioning mechanism to achieve such movement. Positioning wheel 410, which may be referred to as a scrollwheel, specifically includes a circular disc which is rotatable about a fixed axis of housing 302 and may be rotated by the end user's index finger or thumb. When the information or message is being partially displayed, an upwards rotation of positioning wheel 410 causes an upwards scrolling such that display 222 presents viewing of an upper portion of the information or message. Similarly, a downwards rotation of positioning wheel 410 causes a downwards scrolling such that display 222 presents viewing of a lower portion of the information or message. Positioning wheel 410 is mounted along a fixed linear axis such that the end user can depress positioning wheel 410 inwards toward housing 406 (e.g. with the end user's index finger or thumb) for selection of information. Again, see the direction indicated by an arrow 414 of positioning wheel 410 shown.

A more detailed mechanism for positioning wheel 410 is now described in relation to FIGs. 6 and 7. Positioning wheel 410 of FIGs. 6-7 is shown connected to and rotatable about a body assembly 610. Body assembly 610 may be connected to or be part of a slide assembly 720. Slide assembly 720 allows the entirety of positioning wheel 410 and body assembly 610 may move freely laterally 414 with respect to the handheld device. Lateral positioning wheel movement 414 is defined as movement along a plane normal to the rotational axis of positioning wheel 410. To control this lateral movement 414, slide assembly 720 may be connected to a control mechanism such as a cam mechanism 730 with a cam 731, or alternatively a level mechanism, a solenoid mechanism, or some other actuating means. Cam mechanism 730 is connected to a cam controller 740 responsible for controlling a lateral position of positioning wheel 410. As cam 731 connected to cam mechanism 730 and slide assembly 720 moves, positioning wheel 410 and body assembly 610 accordingly move laterally. Such lateral movement inwards toward the housing is detectable by the processor of the mobile station as a switch input (actuation or depression of the positioning wheel key).

Although positioning wheel 410 has been shown and described as one mechanism for use in navigating and moving through visually displayed information, any suitable mechanism may be utilized for the present user interface techniques, such a trackball; UP, DOWN, LEFT, and RIGHT keys; a mouse and cursor mechanism; or a touch screen display mechanism.

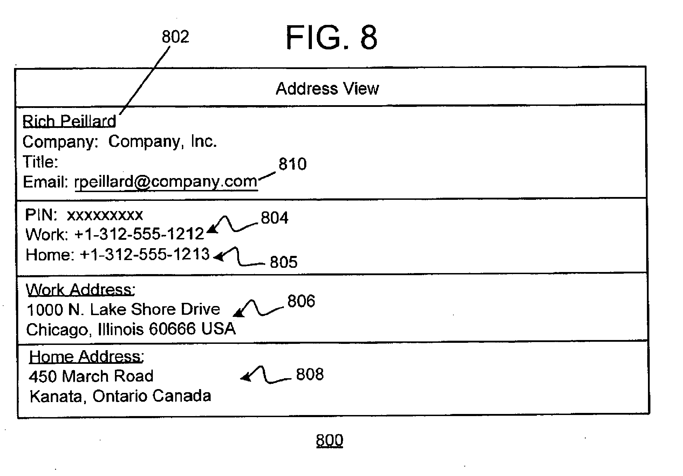

FIG. 8 is an illustration of information which may be displayed in the display 222. In this embodiment, the information displayed in FIG. 8 is an address book contact 800 of an address book which may be displayed in display 222 from use of Address book application 592 (FIG. 5). The address book is for use in organizing a plurality of address book contacts for the end user. This address book contact information 800 may be viewable after opening the Address Book application from the home screen page. In the example of FIG. 8, address book contact information 800 includes an address book name 802 in an address book name field, a business or work telephone number 804 in a business or work telephone number field, a home telephone number 805 in a home telephone number field, a business or work address 806 in one or more business or work address fields, and a home address 808 in one or more home address fields. Other information may include a company name (e.g. Company, Inc.) in a company name field, a title or position of the end user in the company, and a Personal Identification Number (PIN) in a PIN field. Each address book contact of the address book has a plurality of the same fields for organizing such information. Some field of any address book contact may remain empty, depending on the end user and/or the availability of information to the end user. The end user typically manually enters address book contact information for each contact into storage of memory for subsequent use in facilitating communications. Alternatively or additionally, address book contact information may be downloaded or otherwise received in the device in a non-manual fashion. Additional location information for the address book contact information 800 may be included, such as a real-time location of a mobile communication device associated with the selected address book contact received through the wireless transceiver. This location may be in the form of a real-time position address or real-time latitude and longitude coordinates, and may be received substantially in real-time by the mobile communication device.

In addition to providing one or more user applications for the end user as previously described, the mobile station of the present disclosure is also adapted to render visual maps in its display 222. Referring back to FIG. 5, a mapping application 550 is provided in memory 224 of the mobile station for rendering of visual maps in the display. Map rendering may be performed substantially as described in relation to FIG. 3 where the mobile station sends requests for map rendering data to the network with address and/or latitude and longitude coordinates as input, subsequently receiving the map rendering data which it uses to render a map in the visual display. Map rendering data may be cached and maintained in memory over time. Alternatively, map rendering may be performed by retrieving "bitmaps" of the maps and visually displaying these bitmaps corresponding to the address and/or latitude and longitude coordinates.

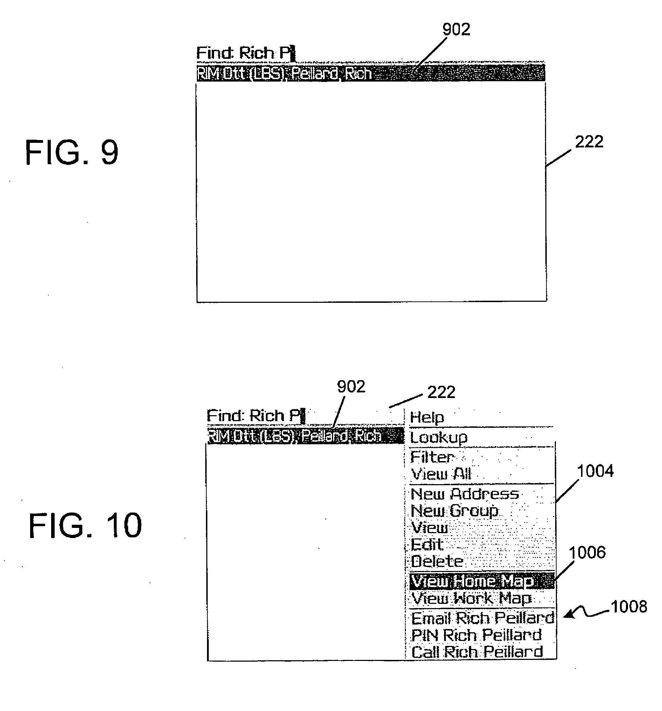

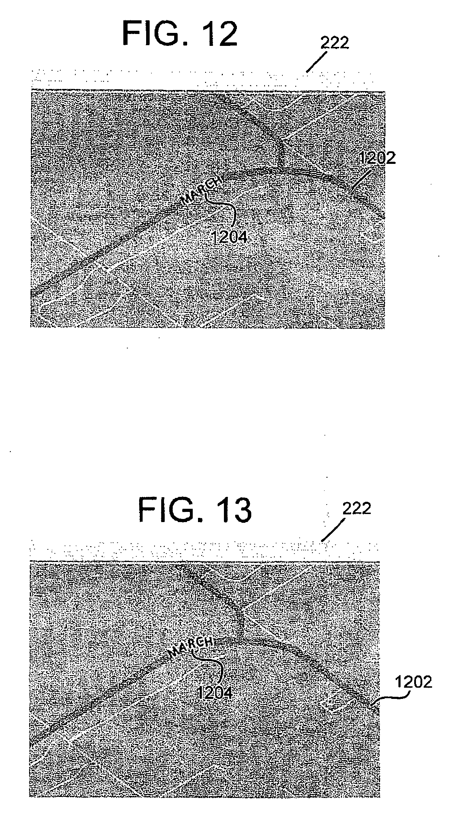

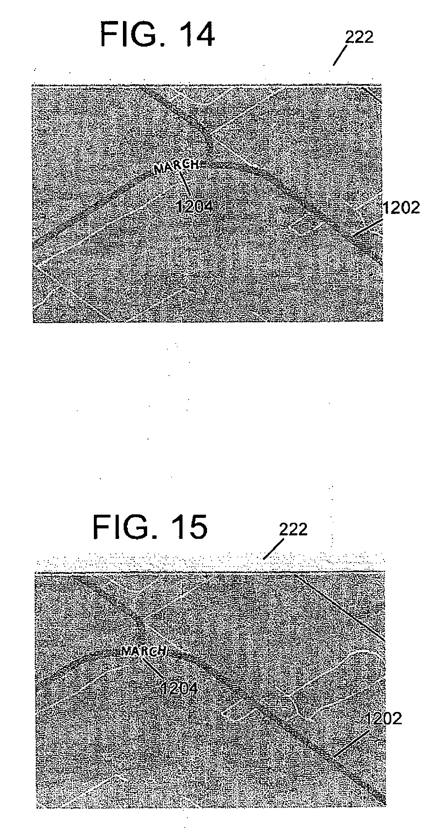

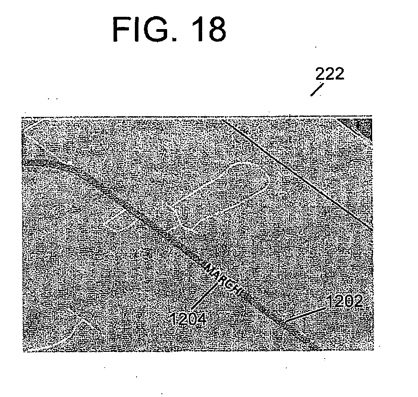

As an example of one way in which the displaying of a map may be initiated, FIG. 9 is an illustration of a listing 902 of the address book contact of FIG. 8. In FIG. 10, it is shown that a pop-up or pull-down menu 1004 with a plurality of function identifiers 1008 may be displayed in association with the listing 902 of the address book contact. The plurality of function identifiers 1008 includes a map function identifier 1006 (e.g. "View Home Map") which may be selected by the end user to cause the map application to be called so that a map associated with the address book contact to be displayed. The map(s) associated with this address book contact are shown and described later in relation to FIGs. 12-18.

Note that the positioning mechanism (e.g. the positioning wheel of FIGs. 4, 6, and 7) of the mobile station may be used by the end user to select this map function identifier 1006, as well as any other function identifier 1008, from menu 1004 in FIG. 9. Specifically, the listing 902 of the address book contact is selected by the end user by depressing or actuating the positioning wheel while the listing 902 is highlighted in FIG. 9, which causes menu 1004 to appear in display 222 as shown in FIG. 10. Subsequently, a cursor may be scrolled up and/or down through function identifiers 1008 of menu 1004 by the end user by rotating the positioning wheel in an upwards and/or downwards direction. By rotating the positioning wheel, the cursor may be positioned over map function identifier 1006 ("View Home Map"), which causes the function identifier to be highlighted as shown in FIG. 10. While map function identifier 1006 is highlighted, map function identifier 1006 is invoked by the end user by depressing or actuating the positioning wheel. Thus, the positioning wheel may be used to scroll, navigate, and select functions in the mobile station as described. More generally, the positioning wheel may be used to scroll, navigate, and select through files, messages, and other information stored in the mobile station.

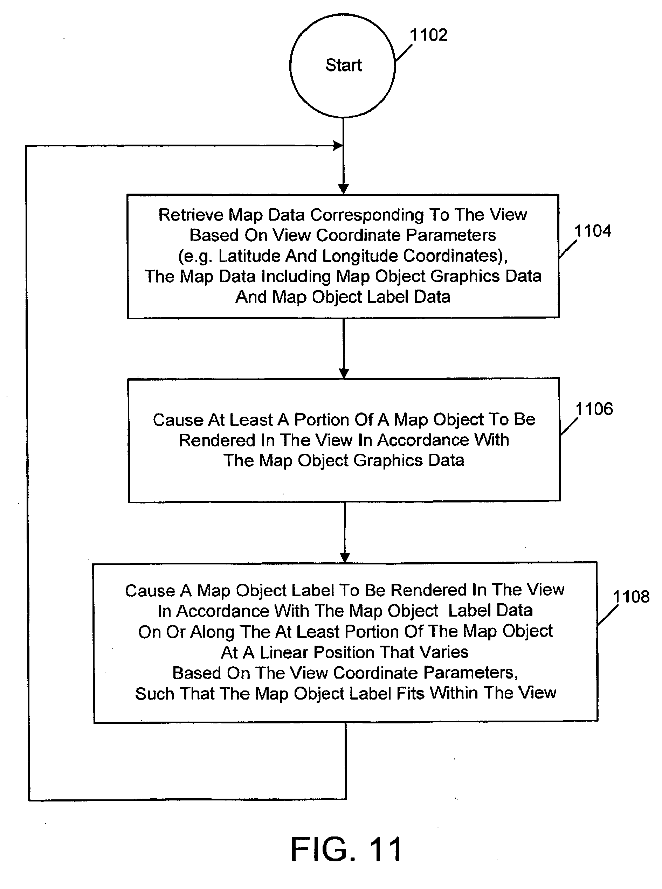

FIG. 11 is a flowchart which helps describe a method of dynamically labeling map objects for the visual display of maps. The method is performed by a mobile communication device as described in relation to the previous figures, or alternatively by any computer or communication device (e.g. a PC). The method may be executed by one or more processors of the communication device. A computer program product for the mobile station may include computer instructions stored on a computer readable medium (memory, a floppy disk or CD-ROM) which are written in accordance with the described logic of this method.

For each view of a plurality of different views of a map, a view of the map is dynamically rendered and generated "on-the-fly" by the communication device in its display. The technique of FIG. 11 may be initiated by a user input request to receive a map view of a location, or by mobile or processor-initiated requests to receive a map view of a location (e.g. when viewing of current real-time location of communication device). Any suitable trigger signal may be utilized to initiate the rendering of a view of a map.

Beginning at a start block 1102 of FIG. 11, in response to the request, the processor causes map data corresponding to the view to be retrieved based on view coordinate parameters of the request (step 1104 of FIG. 11). The view coordinate parameters may include latitude and longitude coordinates, and may include an additional parameter such as a zoom parameter. To obtain the map data in step 1104, the processor may first identify whether map data corresponding to the map of the location is available in its memory cache from a previous rendering of the map. If the map data is available in its cache, the processor selects this cached map data to render the map of the location. If the map data is not available in the cache, however, the processor must retrieve the map data from an external source. In this case, the user input request causes the processor to act on the request by sending a request message for the map data to a server at a predetermined server address. The request message includes the latitude and longitude coordinates (and any other information) to the server as input parameters. A source address of the communication device is also received at the server along with the request. In response, the server operates to receive and process the request to retrieve the map data corresponding to the latitude and longitude coordinates. The server then operates to respond to the request of the communication device by sending a response message which includes the map data to the communication device at its address. The processor of the communication device receives the map data and causes the map of the location to be visually displayed in the display.

The map data retrieved in step 1104 includes at least map object graphics data and map object label data. The map object label data is separate from (and not interspersed within) the map object graphics data. The map object graphics data corresponds to one or more portions of a map object (e.g. a road, or other object such as a park, river, ocean, or lake) to be viewed in the view of the map. Specifically, the map object graphics data may include vertice coordinates which are used by the end device to render the one or more portions of the map object. The vertice coordinates of the one or more portions of the map object are selected based on the view coordinate parameters. In an alternate embodiment, the map object graphics data comprises pure graphics information or file, such as a bitmap. The map object label data corresponds to a map object label (e.g. a name of the road, or other name such as the name of the park, the river, the ocean, or the lake) associated with the map object. The map object label data may comprise viewable text information.

Next, the view of the map corresponding to the view is rendered in the display in steps 1106 and 1108. In particular, the processor causes the one or more portions of the map object (e.g. part of the road) to be rendered in the view of the display in accordance with the map object graphics data (step 1106 of FIG. 11). The processor also causes the map object label (e.g. the name of the road) to be rendered in the view of the display in accordance with the map object label data (step 1108 of FIG. 11). In particular, the map object label is rendered on or along a portion of the map object within its vertice coordinates of the view. This is done so that the map object label always (or almost always) "fits" or is viewable within the view, being positioned along in a continuous moving fashion from view to view. For each view rendering, the specific technique used to render the text along the portion of the map object may be a "text on a path" technique familiar to those skilled in the art.

The method of FIG. 11 of displaying is performed for each request for a new view. The linear position of the map object label on or along the at least portion of the map object is different from the linear position of the map object label on or along the portion of the map object in each of the other subsequent views of the map. This is done so that the map object label moves in a continuous moving fashion from view to view. In any event, the map object label always (or almost always) fits within the view.

A specific, preferred technique for calculating a position of the map object label relative to a portion of the map object is now described. Prior to rendering the map object label, the processor operates to identify the longest "straight" portion of the map object being rendered that has the longest length compared to all other straight portions of the map object (if any others exist for the map object). Note again that a map object may be viewed and rendered as one or more straight portions of objects. The processor may perform this identification task by first identifying vertice coordinate pairs of the portions of the map objects, calculating the lengths of the portions based on the vertice coordinate pairs, comparing the lengths, and identifying the portion having the longest length based on the comparisons. The vertice coordinate pairs may be those vertice coordinates in the map data utilized to render the portion of the map object within the view (e.g. the Maplet data corresponding to the map object, such as a street, with reference to discussion of FIGs. 3A, 3B, and 3C above). Subsequently, the processor operates to calculate or identify a centerpoint of the longest straight portion based on the vertice coordinate pairs of the longest straight portion. The processor then operates to calculate the length of the map object label itself. The length of the map object label may be determined based on a count of alphanumeric text characters associated with the map object label (and, for example, based on a specified size of each alphanumeric text character of the map object label). The processor then uses this calculated information to identify the initial starting point location on or along the portion of the map object where the map object label will be rendered.

Preferably, the map object label is centered along the length of the portion of the map object or rendered relative to the centerpoint. In this case, the initial starting point at which to begin rendering the map object label may be determined to be the centerpoint of the length of the portion of the map object minus one-half of the length of the map object label. Another way to (approximately) achieve this result is to initially calculate or identify a 1/4-point or 2/3-point position (not the exact center position) of the portion of the map object, merely assuming some predetermined average length of the map object label, and identify this point as the initial starting point. Other alternative ways may be appreciated by those skilled in the art. Again, the specific technique used to render the text along the portion of the map object may be referred to as a "text on a path" technique. Thus, the map object label will be rendered along the portion of the map object beginning at the calculated location (e.g. centerpoint of the longest straight portion of the map object). This remains true unless a conflict with another map object, label, or element exists. If a conflict is identified, the map object label is positioned away from the conflict by a predetermined length.

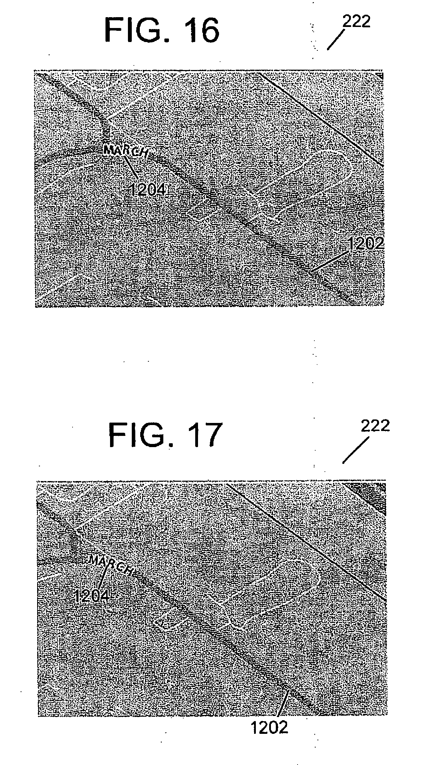

Step 1108 may further include the act of identifying a slope along a side of the map object, where the map object label is rendered on or along the side of the map object in accordance with the slope. The slope may be fixed (see e.g. FIG. 12) or varying (see e.g. FIG. 17) along the side of the map object. The slope may be identified based on a basic ratio calculation using the vertice coordinate pairs of the portion of the map object. In a specific approach, the map object label data received over the air includes text or alphanumeric character data corresponding to the map object label without specifying any particular character rotation for viewing. The processor maintains storage of a set of rotated alphanumeric characters for each one of a plurality of possible desired rotations or slopes. When the slope of the portion of the map object is identified by the processor, the processor identifies a particular alphanumeric character in the map object label, and selects a corresponding particular alphanumeric character from the set of rotated alphanumeric characters associated with the identified slope. This technique is performed for each alphanumeric character instance along the side of the portion of the map object. That is, the rotation of each character of the map object label provided in the view preferably corresponds to the slope at each character location point taken along the side of the map object.

The technique described above is performed for each and every new view of the map. The following figures further illustrate the above-identified techniques. Specifically, FIGs. 12-18 are sequential views of a map to illustrate an example of the method of the present disclosure. The view of FIG. 12 may be initiated in response to the actions taken by the end user as described previously in relation to FIGs. 8-10. In general, each figure in FIGs. 12-18 reveals a view of a map which includes a map object 1202 (e.g. a road) and a map object label 1204 (e.g. a name of the road; namely, MARCH road). The map is panned from left to right in the views of FIGs. 12-18; this panning may be performed in response to user input to position the view or in response to real-time tracking of the mobile device.

As apparent in FIGS. 12-18, the linear position of map object label 1204 on the portion of map object 1202 changes continuously from view to view, such that map object label 1204 moves in a continuous moving fashion from view to view. This is due to the fact that map object label 1204 is rendered on the portion of map object 1202 at a linear position that depends on, or varies based on, the vertice coordinates of the portion of map object 1202, for each and every view. This is done at least so that map object label 1204 always (or almost always) fits or is viewable within the view, for each and every view. In techniques of the prior art, a map object label of a map object is fixed within the graphics data and fails to always appear or conspicuously appear in several views of the map.

Thus, methods and apparatus for dynamically labeling map objects for different views of a visually displayed map have been described. For each view of a plurality of different views of a map, a view of the map is rendered "on-the-fly" in a display. The technique is performed by retrieving map data which includes map object graphics data and map object label data; causing one or more portions of a map object (e.g. a road) to be rendered in the view of the display in accordance with the map object graphics data; and also causing a map object label (e.g. a name of the road) to be rendered in the view of the display, in accordance with the map object label data, on or along a portion of the map object between its vertice coordinates, such that a linear position of the map object label on or along the portion of the map object is different from its linear position in each of the other views of the map so that the map object label fits within the view in a continuous moving fashion from view to view. In a specific embodiment, the map object label is rendered by identifying the portion of the map object to be a longest portion of the one or more portions of the map object in the view; identifying a centerpoint of the portion identified to be the longest portion; and causing the map object label to be rendered relative to the centerpoint of the portion identified to be the longest portion. The method may further include the act of identifying a slope along a side of the map object, where the map object label is rendered on or along the side of the portion of the map object in accordance with the slope.

The above-described embodiments of the present disclosure are intended to be examples only. Those of skill in the art may effect alterations, modifications and variations to the particular embodiments without departing from the scope of the invention. The term "road" is meant to refer to any navigation path such as a street, a highway, a walk path or bike path. The invention described herein in the recited claims intends to cover and embrace all suitable changes in technology.

## Claims

1. A method in a mobile communication device (202) for dynamically labeling map objects for displaying different views of a map in a display (222), where each view of the map is displayed by:
identifying a request for a view of a map (1410);
if map data for a location corresponding to latitude and longitude coordinates of the request is not cached in memory of the mobile communication device (202):
sending, via the wireless communication network (104), a request for map data with the latitude and longitude coordinates of the location as an input;
receiving, via the wireless communication network (104), map data for the location corresponding to the latitude and longitude coordinates in response to the request for the map data;
causing the map (1410) to be rendered in the display (222) based on the map data received via the wireless communication network (104) in response to the request for the map data;
otherwise, if map data for the location is cached in the memory: causing the map (1410) for the location to be rendered in the display (222) based on the map data cached in the memory;
wherein the map data comprise maplets structured in a plurality of layers of data entries, and further comprise map object graphics data and map object label data separate from the map object graphics data, the map object graphics data corresponding to at least a portion of a map object (1202) and including vertice coordinates, and the map object label data corresponding to a map object label (1204) associated with the map object (1202) and comprising alphanumeric characters;
wherein causing the map (1410) to be rendered in the display (222) comprises causing the portion of the map object (1202) to be rendered in the view of the display (222) in accordance with the vertice coordinates of the map object graphics data;
wherein causing the map (1410) to be rendered in the display (222) further comprises causing the map object label (1204) to be rendered in the view of the display (222), in accordance with the map object label data, on or along the portion of the map object (1202) between the vertice coordinates in accordance with a varying slope of the portion of the map object (1202), at a position on or along the portion of the map object (1202) that is different from its position in each of the other views of the map and contained within the view in a continuous moving fashion from view to view, by performing the following further acts of:
maintaining a plurality of stored rotated alphanumeric characters in the memory; and
for each alphanumeric character of the map object label (1204) to be rendered at each location point along the varying slope of the portion of the map object (1202): identifying a slope at the location point of the portion of the map object (1202) to render the alphanumeric character; identifying the alphanumeric character in the map object label (1204) for rendering; selecting, from the memory, one of the stored rotated alphanumeric characters that corresponds to the identified alphanumeric character in the map object label (1204) and the identified slope; and causing the selected stored rotated alphanumeric character corresponding to the slope to be rendered at the location point on or along the portion of the map.

2. The method of claim 1, further comprising:
identifying that the portion of the map object (1202) is a longest portion of the map object (1202) rendered in the view.

3. The method of claim 2, further comprising:
identifying a centerpoint of the portion of the map object (1202); and
wherein the act of causing the map object label (1204) to be rendered in the view of the display (222) comprises the further act of causing the map object label (1204) to be rendered at the centerpoint of the portion of the map object (1202).

4. The method of claim 1, wherein the map object (1202) comprises a road, park, river, ocean, or lake, and the map object label (1204) comprises a name of the road, the park, the river, the ocean, or the lake.

5. The method of claim 1, wherein the mobile communication device (202) is a handheld portable device and the wireless communication network (104) is a cellular telecommunications network.

6. The method of claim 1, further comprising:
if a conflict with another map object or map object label is identified while rendering the map object label (1204), positioning the map object label (1204) away from the other map object or map object label by a predetermined length.

7. The method of claim 1, wherein the acts of causing the view to be displayed are performed in response to a trigger signal for the view of the map.

8. The method of claim 1, which is embodied as a computer program product comprising a computer readable medium and computer instructions stored in the computer readable medium which are executable by one or more processors of a mobile communication device to perform the method.

9. A mobile communication device (202), comprising:
a wireless transceiver (211) operative for communications with a wireless communication network (104);
one or more processors (238);
memory coupled to the one or more processors (238);
a user interface which includes a visual display (222);
the one or more processors (238) being operative to, for each view of a plurality of different views of a map, cause the view of the map to be displayed in the visual display (222) by:
identifying a request for a view of a map (1410);
if map data for a location corresponding to latitude and longitude coordinates of the request is not cached in the memory:
sending, via the wireless transceiver (211), a request for map data with the latitude and longitude coordinates of the location as an input;
receiving, via the wireless transceiver (211), map data for the location corresponding to the latitude and longitude coordinates in response to the request for the map data;
causing the map (1410) to be rendered in the visual display (222) based on the map data received via the wireless transceiver (211) in response to the request for the map data;
otherwise, if map data for the location is cached in the memory: causing the map (1410) for the location to be rendered in the visual display (222) based on the map data cached in the memory;
wherein the map data comprise maplets structured in a plurality of layers of data entries, and further comprise map object graphics data and map object label data separate from the map object graphics data, the map object graphics data corresponding to at least a portion of a map object (1202) and including vertice coordinates, and the map object label data corresponding to a map object label (1204) associated with the map object (1202) and comprising alphanumeric characters;
wherein causing the map (1410) to be rendered in the display (222) comprises causing the portion of the map object (1202) to be rendered in the view of the visual display (222) in accordance with the vertice coordinates of the map object graphics data;
wherein causing the map (1410) to be rendered in the display (222) further comprises causing the map object label (1204) to be rendered in the view of the visual display (222), in accordance with the map object label data, on or along the portion of the map object (1202) between the vertice coordinates in accordance with a varying slope of the portion of the map object (1202), at a position on or along the portion of the map object (1202) that is different from its position in each of the other views of the map and contained within the view in a continuous moving fashion from view to view, by:
maintaining a plurality of stored rotated alphanumeric characters in the memory; and
for each alphanumeric character of the map object label (1204) to be rendered at each location point along the varying slope of the portion of the map object (1202): identifying a slope at the location point of the portion of the map object (1202) to render the alphanumeric character; identifying the alphanumeric character in the map object label (1204) for rendering; selecting, from the memory, one of the stored rotated alphanumeric characters that corresponds to the identified alphanumeric character in the map object label (1204) and the identified slope; and causing the selected stored rotated alphanumeric character corresponding to the slope to be rendered at the location point on or along the portion of the map.

10. The mobile communication device (202) of claim 9, wherein the one or more processors (238) are further operative to:
identify that the portion of the map object (1202) is a longest portion of the map object (1202) rendered in the view.

11. The mobile communication device (202) of claim 10, wherein the one or more processors (202) are further operative to:
identify a centerpoint of the portion of the map object (1202); and
cause the map object label (1204) to be rendered in the view of the display (222) by causing the map object label (1204) to be rendered at the centerpoint of the portion of the map object (1202).

12. The mobile communication device (202) of claim 9, wherein the map object (1202) comprises a road, park, river, ocean, or lake, and the map object label (1204) comprises a name of the road, the park, the river, the ocean, or the lake.

13. The mobile communication device of claim 9, which is a handheld portable device and the wireless communication network (104) is a cellular telecommunications network.

## Patentansprüche

1. Verfahren in einer mobilen Kommunikationsvorrichtung (202) zum dynamischen Bezeichnen von Kartenobjekten zur Anzeige von unterschiedlichen Ansichten einer Karte in einer Anzeige (222), wobei jede Ansicht der Karte angezeigt wird durch:
Identifizieren einer Anforderung für eine Ansicht einer Karte (1410); wenn Kartendaten für einen Standort bzw. eine Position, der/die den Koordinaten geographischer Breite und Länge der Anforderung entspricht, nicht in dem Cache-Speicher der mobilen Kommunikationsvorrichtung (202) gespeichert sind:
Senden, über das drahtlose Kommunikationsnetzwerk (104), einer Anforderung für Kartendaten mit den Breiten- und Längen-Koordinaten der Position als eine Eingabe;
Empfangen, über das drahtlose Kommunikationsnetzwerk (104), von Kartendaten für die Position, die den Breiten- und Längen-Koordinaten entspricht, als Reaktion auf die Anforderung für die Kartendaten;
Veranlassen, dass die Karte (1410) auf der Anzeige (222) gerendert bzw. wiedergegeben wird basierend auf den Kartendaten, die über das drahtlose Kommunikationsnetzwerk (104) empfangen werden, als Reaktion auf die Anforderung für die Kartendaten;
ansonsten, wenn Kartendaten für die Position in dem Cache-Speicher gespeichert sind: Veranlassen, dass die Karte (1410) für die Position in der Anzeige (222) wiedergegeben wird basierend auf den Kartendaten, die in dem Cache-Speicher gespeichert sind;
wobei die Kartendaten Maplets aufweisen, die in einer Vielzahl von Ebenen von Dateneinträgen strukturiert sind, und weiter Kartenobjektgraphikdaten und Kartenobjektbezeichnungsdaten, getrennt von den Kartenobjektgraphikdaten, aufweisen, wobei die Kartenobjektgraphikdaten zumindest einem Teil eines Kartenobjekts (1202) entsprechen und Vertex-Koordinaten umfassen, und wobei die Kartenobjektbezeichnungsdaten einer Kartenobjektbezeichnung (1204) entsprechen, die zu dem Kartenobjekt (1202) gehört und alphanumerische Buchstaben bzw. Zeichen aufweist;
wobei ein Veranlassen, dass die Karte (1410) auf der Anzeige (222) wiedergegeben wird, aufweist ein Veranlassen, dass der Teil des Kartenobjekts (1202) in der Ansicht der Anzeige (222) wiedergegeben wird in Übereinstimmung mit den Vertex-Koordinaten der Kartenobjektgraphikdaten;
wobei ein Veranlassen, dass die Karte (1410) auf der Anzeige (222) wiedergegeben wird, weiter aufweist ein Veranlassen, dass die Kartenobjektbezeichnung (1204) in der Ansicht der Anzeige (222) wiedergegeben wird, in Übereinstimmung mit den Kartenobjektbezeichnungsdaten, auf dem Teil oder entlang des Teils des Kartenobjekts (1202) zwischen den Vertex-Koordinaten in Übereinstimmung mit einer variierenden Neigung des Teils des Kartenobjekts (1202), an einer Position auf dem Teil oder entlang des Teils des Kartenobjekts (1202), die verschieden ist von seiner Position in jeder der anderen Ansichten der Karte und enthalten in der Ansicht auf eine sich kontinuierlich bewegende Weise von Ansicht zu Ansicht, durch Durchführen der folgenden weiteren Vorgänge:
Führen einer Vielzahl von gespeicherten rotierten alphanumerischen Zeichen in dem Speicher; und
für jedes alphanumerische Zeichen der Kartenobjektbezeichnung (1204), das an jedem Positionspunkt entlang der variierenden Neigung des Teils des Kartenobjekts (1202) wiedergegeben werden soll: Identifizieren einer Neigung an dem Positionspunkt des Teils des Kartenobjekts (1202) zur Wiedergabe des alphanumerischen Zeichens; Identifizieren des alphanumerischen Zeichens in der Kartenobjektbezeichnung (1204) zur Wiedergabe; Auswählen aus dem Speicher eines der gespeicherten rotierten alphanumerischen Zeichen, das dem identifizierten alphanumerischen Zeichen in der Kartenobjektbezeichnung (1204) und der identifizierten Neigung entspricht; und Veranlassen, dass das ausgewählte gespeicherte rotierte alphanumerische Zeichen, das der Neigung entspricht, an dem Positionspunkt auf dem Teil oder entlang des Teils der Karte wiedergegeben wird.

2. Verfahren gemäß Anspruch 1, das weiter aufweist:
Identifizieren, dass der Teil des Kartenobjekts (1202) ein längster Teil des Kartenobjekts (1202) ist, das in der Ansicht wiedergegeben wird.

3. Verfahren gemäß Anspruch 2, das weiter aufweist:
Identifizieren eines Mittelpunkts des Teils des Kartenobjekts (1202); und
wobei der Vorgang des Veranlassens, dass die Kartenobjektbezeichnung (1204) in der Ansicht der Anzeige (222) wiedergegeben wird, den weiteren Vorgang eines Veranlassens aufweist, dass die Kartenobjektbezeichnung (1204) an dem Mittelpunkt des Teils des Kartenobjekts (1202) wiedergegeben wird.

4. Verfahren gemäß Anspruch 1, wobei das Kartenobjekt (1202) eine Strasse, einen Park, einen Fluss, einen Ozean oder einen See aufweist, und die Kartenobjektbezeichnung (1204) einen Namen der Strasse, des Parks, des Flusses, des Ozeans oder des Sees aufweist.

5. Verfahren gemäß Anspruch 1, wobei die mobile Kommunikationsvorrichtung (202) eine handgehaltene tragbare Vorrichtung ist und das drahtlose Kommunikationsnetzwerk (104) ein zellulares Telekommunikationsnetzwerk ist.

6. Verfahren gemäß Anspruch 1, das weiter aufweist:
wenn ein Konflikt mit einem anderen Kartenobjekt oder einer anderen Kartenobjektbezeichnung identifiziert wird bei der Wiedergabe der Kartenobjektbezeichnung (1204), Positionieren der Kartenobjektbezeichnung (1204) weg von dem anderen Kartenobjekt oder der Kartenobjektbezeichnung um eine vorgegebene Länge.

7. Verfahren gemäß Anspruch 1, wobei die Vorgänge eines Veranlassens, dass die Ansicht angezeigt wird, als Reaktion auf ein Auslösesignal für die Ansicht der Karte durchgeführt werden.

8. Verfahren gemäß Anspruch 1, das als ein Computerprogrammprodukt ausgeführt wird, das ein Computer-lesbares Medium und Computeranweisungen aufweist, die in dem Computer-lesbaren Medium gespeichert sind, die durch einen oder mehrere Prozessor(en) einer mobilen Kommunikationsvorrichtung ausführbar sind zur Durchführung des Verfahrens.

9. Mobile Kommunikationsvorrichtung (202), die aufweist:
einen drahtlosen Transceiver (211), der betriebsfähig ist zur Kommunikation mit einem drahtlosen Kommunikationsnetzwerk (104); einen oder mehrere Prozessor(en) (238);
einen Speicher, der mit dem einen oder den mehreren Prozessor(en) (238) verbunden ist;
eine Benutzerschnittstelle, die eine visuelle Anzeige (222) umfasst;
wobei der eine oder die mehreren Prozessor(en) (238) betriebsfähig ist/sind, für jede Ansicht einer Vielzahl von verschiedenen Ansichten einer Karte, zu veranlassen, dass die Ansicht der Karte in der visuellen Anzeige (222) angezeigt wird, durch:
Identifizieren einer Anforderung für eine Ansicht einer Karte (1410); wenn Kartendaten für einen Standort bzw. eine Position, der/die den Koordinaten geographischer Breite und Länge der Anforderung entspricht, nicht in dem Cache-Speicher gespeichert sind:
Senden, über den drahtlosen Transceiver (211), einer Anforderung für Kartendaten mit den Breiten- und Längen-Koordinaten der Position als eine Eingabe;
Empfangen, über den drahtlosen Transceiver (211), von Kartendaten für die Position, die den Breiten- und Längen-Koordinaten entspricht, als Reaktion auf die Anforderung für die Kartendaten;
Veranlassen, dass die Karte (1410) in der visuellen Anzeige (222) gerendert bzw, wiedergegeben wird basierend auf den Kartendaten, die über den drahtlosen Transceiver (211) empfangen werden, als Reaktion auf die Anforderung für die Kartendaten;
ansonsten, wenn Kartendaten für die Position in dem Cache-Speicher gespeichert sind: Veranlassen, dass die Karte (1410) für die Position in der visuellen Anzeige (222) wiedergegeben wird basierend auf den Kartendaten, die in dem Cache-Speicher gespeichert sind;
wobei die Kartendaten Maplets aufweisen, die in einer Vielzahl von Ebenen von Dateneinträgen strukturiert sind, und weiter Kartenobjektgraphikdaten und Kartenobjektbezeichnungsdaten, getrennt von den Kartenobjektgraphikdaten, aufweisen, wobei die Kartenobjektgraphikdaten zumindest einem Teil eines Kartenobjekts (1202) entsprechen und Vertex-Koordinaten umfassen, und wobei die Kartenobjektbezeichnungsdaten einer Kartenobjektbezeichnung (1204) entsprechen, die zu dem Kartenobjekt (1202) gehört und alphanumerische Buchstaben bzw. Zeichen aufweist;
wobei ein Veranlassen, dass die Karte (1410) auf der Anzeige (222) wiedergegeben wird, aufweist ein Veranlassen, dass der Teil des Kartenobjekts (1202) in der Ansicht der visuellen Anzeige (222) wiedergegeben wird in Übereinstimmung mit den Vertex-Koordinaten der Kartenobjektgraphikdaten;
wobei ein Veranlassen, dass die Karte (1410) auf der Anzeige (222) wiedergegeben wird, weiter aufweist ein Veranlassen, dass die Kartenobjektbezeichnung (1204) in der Ansicht der visuellen Anzeige (222) wiedergegeben wird, in Übereinstimmung mit den Kartenobjektbezeichnungsdaten, auf dem Teil oder entlang des Teils des Kartenobjekts (1202) zwischen den Vertex-Koordinaten in Übereinstimmung mit einer variierenden Neigung des Teils des Kartenobjekts (1202), an einer Position auf dem Teil oder entlang des Teils des Kartenobjekts (1202), die verschieden ist von seiner Position in jeder der anderen Ansichten der Karte und enthalten in der Ansicht auf eine sich kontinuierlich bewegende Weise von Ansicht zu Ansicht, durch:
Führen einer Vielzahl von gespeicherten rotierten alphanumerischen Zeichen in dem Speicher; und
für jedes alphanumerische Zeichen der Kartenobjektbezeichnung (1204), das wiedergegeben wird an jedem Positionspunkt entlang der variierenden Neigung des Teils des Kartenobjekts (1202):
Identifizieren einer Neigung an dem Positionspunkt des Teils des Kartenobjekts (1202) zur Wiedergabe des alphanumerischen Zeichens; Identifizieren des alphanumerischen Zeichens in der Kartenobjektbezeichnung (1204) zur Wiedergabe; Auswählen aus dem Speicher eines der gespeicherten rotierten alphanumerischen Zeichen, das dem identifizierten alphanumerischen Zeichen in der Kartenobjektbezeichnung (1204) und der identifizierten Neigung entspricht; und Veranlassen, dass das ausgewählte gespeicherte rotierte alphanumerische Zeichen, das der Neigung entspricht, an dem Positionspunkt auf dem Teil oder entlang des Teils der Karte wiedergegeben wird.

10. Mobile Kommunikationsvorrichtung (202) gemäß Anspruch 9, wobei der eine oder mehrere Prozessor(en) (238) weiter betriebsfähig ist/sind:
zu identifizieren, dass der Teil des Kartenobjekts (1202) ein längster Teil des Kartenobjekts (1202) ist, das in der Ansicht wiedergegeben wird.

11. Mobile Kommunikationsvorrichtung (202) gemäß Anspruch 10, wobei der eine oder mehrere Prozessor(en) (238) weiter betriebsfähig ist/sind:
einen Mittelpunkt des Teils des Kartenobjekts (1202) zu identifizieren; und
zu veranlassen, dass die Kartenobjektbezeichnung (1204) in der Ansicht der Anzeige (222) wiedergegeben wird, durch Veranlassen, dass die Kartenobjektbezeichnung (1204) an dem Mittelpunkt des Teils des Kartenobjekts (1202) wiedergegeben wird.

12. Mobile Kommunikationsvorrichtung (202) gemäß Anspruch 9, wobei das Kartenobjekt (1202) eine Strasse, einen Park, einen Fluss, einen Ozean oder einen See aufweist, und die Kartenobjektbezeichnung (1204) einen Namen der Strasse, des Parks, des Flusses, des Ozeans oder des Sees aufweist.

13. Mobile Kommunikationsvorrichtung gemäß Anspruch 9, die eine handgehaltene tragbare Vorrichtung ist und wobei das drahtlose Kommunikationsnetzwerk (104) ein zellulares Telekommunikationsnetzwerk ist.

## Revendications

1. Procédé d'étiquetage dynamique d'objets cartographiques sur un dispositif de communication mobile (202), destiné à afficher différentes vues d'une carte sur un écran d'affichage (222), chacune des vues de la carte étant affichée par les étapes consistant à :
identifier une demande d'une vue d'une carte (1410) ;
si les données cartographiques d'une position correspondant à des coordonnées de latitude et de longitude de la demande ne sont pas placées dans l'antémémoire du dispositif de communication mobile (202) :
envoyer via le réseau de communication sans fil (104) une demande de données cartographiques avec les coordonnées de latitude et de longitude de la position comme données d'entrée ;
recevoir, via le réseau de communication sans fil, (104) des données cartographiques pour la position correspondant aux coordonnées de latitude et de longitude, en réponse à la demande de données cartographiques ;
commander le rendu de la carte (1410) sur l'écran d'affichage (222), sur la base des données cartographiques reçues via le réseau de communication sans fil (104) en réponse à la demande de données cartographiques ;
sinon, si des données cartographiques pour la position sont stockées dans l'antémémoire : commander le rendu de la carte (1410) sur l'écran d'affichage (222), sur la base des données cartographiques stockées dans l'antémémoire ;
dans lequel les données cartographiques comprennent des appliquettes Maple (pour « *maplets* ») structurées en une pluralité de couches d'enregistrements de données et comprennent en outre des données graphiques d'objets cartographiques et des données d'étiquetage d'objets cartographiques séparées des données graphiques d'objets cartographiques, les données graphiques d'objets cartographiques correspondant à au moins une portion d'un objet cartographique (1202) et incluant des coordonnées de sommets et les données d'étiquetage d'objets cartographiques correspondant à une étiquette d'objet cartographique (1204) associée à l'objet cartographique (1202) et comprenant des caractères alphanumériques ;
dans lequel l'étape de commande du rendu de la carte (1410) sur l'écran d'affichage (222) comprend l'étape consistant à commander le rendu de la portion de l'objet cartographique (1202) dans la vue de l'écran d'affichage (222) en fonction des coordonnées de sommets des données graphiques d'objets cartographiques ;
dans lequel l'étape de commande du rendu de la carte (1410) sur l'écran d'affichage (222) comprend en outre l'étape consistant à commander le rendu de l'étiquette d'objet cartographique (1204) dans la vue de l'écran d'affichage (222), en fonction des données d'étiquetage d'objets cartographiques, sur ou le long de la portion de l'objet cartographique (1202) située entre les coordonnées de sommets, en fonction d'une pente variable de la portion de l'objet cartographique (1202), dans une position se trouvant sur ou le long de la portion de l'objet cartographique (1202) qui est différente de sa position dans chacune des autres vues de la carte et qui est contenue dans la vue, avec un mouvement continu de vue en vue, en exécutant en outre les étapes consistant à :
maintenir en mémoire une pluralité de caractères alphanumériques pivotés ; et
pour chaque caractère alphanumérique dans l'étiquette d'objet cartographique (1204) qui doit être rendu à chaque point de position le long de la pente variable de la portion de l'objet cartographique (1202) : identifier une pente au point de position de la portion de l'objet cartographique (1202) afin de rendre le caractère alphanumérique ; identifier le caractère alphanumérique dans l'étiquette d'objet cartographique (1204) pour son rendu ; sélectionner, dans la mémoire, l'un des caractères alphanumériques pivotés qui correspond au caractère alphanumérique identifié dans l'étiquette d'objet cartographique (1204) et à la pente identifiée ; et commander le rendu du caractère alphanumérique pivoté mémorisé ainsi sélectionné, correspondant à la pente, au point de position sur ou le long de la portion de la carte.

2. Procédé selon la revendication 1, comprenant en outre l'étape consistant à identifier que la portion de l'objet cartographique (1202) est une portion la plus longue de l'objet cartographique (1202) qui est rendu dans la vue.

3. Procédé selon la revendication 2, comprenant en outre l'étape consistant à identifier un point central de la portion de l'objet cartographique (1202) ; et
dans lequel l'étape de commande du rendu de l'étiquette d'objet cartographique (1204) dans la vue de l'écran d'affichage (222) comprend en outre l'étape consistant à commander le rendu de l'étiquette d'objet cartographique (1204) au point central de la portion de l'objet cartographique (1202).

4. Procédé selon la revendication 1, dans lequel l'objet cartographique (1202) comprend une route, un parc, une rivière, un océan ou un lac et l'étiquette d'objet cartographique (1204) comprend un nom de la route, du parc, de la rivière, de l'océan ou du lac.

5. Procédé selon la revendication 1, dans lequel le dispositif de communication mobile (202) est un dispositif portable portatif et le réseau de communication sans fil (104) est un réseau de télécommunications cellulaire.

6. Procédé selon la revendication 1, comprenant en outre l'étape consistant à :
si un conflit est identifié avec un autre objet cartographique ou avec une autre étiquette d'objet cartographique pendant le rendu de l'étiquette d'objet cartographique (1204), positionner l'étiquette d'objet cartographique (1204) en l'écartant d'une longueur prédéterminée de l'autre objet cartographique ou de l'autre étiquette d'objet cartographique.

7. Procédé selon la revendication 1, dans lequel les étapes de commande de l'affichage de la vue sont exécutées en réponse à un signal de déclenchement pour la vue de la carte.

8. Procédé selon la revendication 1, matérialisé sous la forme d'un progiciel d'ordinateur comprenant un support lisible par ordinateur et des instructions d'ordinateur stockées sur le support lisible par ordinateur qui peuvent être exécutées par un ou plusieurs processeurs d'un dispositif de communication mobile afin de mettre en oeuvre le procédé.

9. Dispositif de communication mobile (202), comprenant :
un émetteur-récepteur sans fil (211), en mesure de communiquer avec un réseau de communication sans fil (104) ;
un ou plusieurs processeurs (238) ;
une mémoire couplée auxdits un ou plusieurs processeurs (238) ;
une interface utilisateur qui comprend un écran d'affichage visuel (222) ;
lesdits un ou plusieurs processeurs (238) étant en mesure, pour chaque vue d'une pluralité de vues différentes d'une carte, de commander l'affichage de la vue de la carte sur l'écran d'affichage visuel (222) à l'aide des étapes consistant à :
identifier une demande d'une vue d'une carte (1410) ;
si les données cartographiques d'une position correspondant à des coordonnées de latitude et de longitude de la demande ne sont pas placées dans l'antémémoire :
envoyer via l'émetteur-récepteur (211) une demande de données cartographiques avec les coordonnées de latitude et de longitude de la position comme données d'entrée ;
recevoir via l'émetteur-récepteur (211) des données cartographiques pour la position correspondant aux coordonnées de latitude et de longitude, en réponse à la demande de données cartographiques ;
commander le rendu de la carte (1410) sur l'écran d'affichage visuel (222), sur la base des données cartographiques reçues via l'émetteur-récepteur (211) en réponse à la demande de données cartographiques ;
sinon, si des données cartographiques pour la position sont stockées dans l'antémémoire : commander le rendu de la carte (1410) sur l'écran d'affichage visuel (222), sur la base des données cartographiques stockées dans l'antémémoire ;
dans lequel les données cartographiques comprennent des appliquettes Maple structurées en une pluralité de couches d'enregistrements de données et comprennent en outre des données graphiques d'objets cartographiques et des données d'étiquetage d'objets cartographiques séparées des données graphiques d'objets cartographiques, les données graphiques d'objets cartographiques correspondant à au moins une portion d'un objet cartographique (1202) et incluant des coordonnées de sommets et les données d'étiquetage d'objets cartographiques correspondant à une étiquette d'objet cartographique (1204) associée à l'objet cartographique (1202) et comprenant des caractères alphanumériques ;
dans lequel l'étape de commande du rendu de la carte (1410) sur l'écran d'affichage (222) comprend l'étape consistant à commander le rendu de la portion de l'objet cartographique (1202) dans la vue de l'écran d'affichage visuel (222) en fonction des coordonnées de sommets des données graphiques d'objets cartographiques ;
dans lequel l'étape de commande du rendu de la carte (1410) sur l'écran d'affichage (222) comprend en outre l'étape consistant à commander le rendu de l'étiquette d'objet cartographique (1204) dans la vue de l'écran d'affichage visuel (222), en fonction des données d'étiquetage d'objets- cartographiques, sur ou le long de la portion de l'objet cartographique (1202) située entre les coordonnées de sommets, en fonction d'une pente variable de la portion de l'objet cartographique (1202), dans une position se trouvant sur ou le long de la portion de l'objet cartographique (1202) qui est différente de sa position dans chacune des autres vues de la carte et qui est contenue dans la vue, avec un mouvement continu de vue en vue, en exécutant en outre les étapes consistant à :
maintenir en mémoire une pluralité de caractères alphanumériques pivotés ; et
pour chaque caractère alphanumérique dans l'étiquette d'objet cartographique (1204) qui doit être rendu à chaque point de position le long de la pente variable de la portion de l'objet cartographique (1202) : identifier une pente au point de position de la portion de l'objet cartographique (1202) afin de rendre le caractère alphanumérique ; identifier le caractère alphanumérique dans l'étiquette d'objet cartographique (1204) pour son rendu ; sélectionner, dans la mémoire, l'un des caractères alphanumériques pivotés qui correspond au caractère alphanumérique identifié dans l'étiquette d'objet cartographique (1204) et à la pente identifiée ; et commander le rendu du caractère alphanumérique pivoté mémorisé ainsi sélectionné, correspondant à la pente, au point de position sur ou le long de la portion de la carte.

10. Dispositif de communication mobile (202) selon la revendication 9, dans lequel lesdits un ou plusieurs processeurs (238) sont en outre en mesure de :
identifier que la portion de l'objet cartographique (1202) est une portion la plus longue de l'objet cartographique (1202) qui est rendu dans la vue.

11. Dispositif de communication mobile (202) selon la revendication 10, dans lequel lesdits un ou plusieurs processeurs (202) sont en outre en mesure de :
identifier un point central de la portion de l'objet cartographique (1202) ; et
commander le rendu de l'étiquette d'objet cartographique (1204) dans la vue de l'écran d'affichage (222) en commandant le rendu de l'étiquette d'objet cartographique (1204) au point central de la portion de l'objet cartographique (1202).

12. Dispositif de communication mobile (202) selon la revendication 9, dans lequel l'objet cartographique (1202) comprend une route, un parc, une rivière, un océan ou un lac et l'étiquette d'objet cartographique (1204) comprend un nom de la route, du parc, de la rivière, de l'océan ou du lac.

13. Dispositif de communication mobile (202) selon la revendication 9, qui est un dispositif portable portatif, dans lequel le réseau de communication sans fil (104) est un réseau de télécommunication cellulaire.
